# EUROPÄISCHE PATENTSCHRIFT

(11) **EP 0 690 643 B1**
(45) Veröffentlichungstag und Bekanntmachung des Hinweises auf die Patenterteilung: **02.11.2000**
(21) Anmeldenummer: 95108281.7
(22) Anmeldetag: 31.05.1995
(51) Int. Cl.: H04Q 7/36

(54) **Anordnungen ortsfester Sendestationen eines flächendeckenden Funknetzes**
Base stations arrangement for zone covering radio network
Arrangement de stations de base pour réseau radio à couverture par zones

(30) Priorität: 28.06.1994 DE 4422490; 20.01.1995 DE 19501603
(43) Veröffentlichungstag der Anmeldung: 03.01.1996
(73) Patentinhaber: Littlefeet, Inc., Fremont, CA 94539 (US)
(72) Erfinder: Scheinert, Stefan, 90443 Nürnberg (DE)
(74) Vertreter: Götz, Georg, Dipl.-Ing.

(56) Entgegenhaltungen:
- EP-A- 0 212 113
- EP-A- 0 391 597
- WO-A-94/05096

## Beschreibung

Die Erfindung richtet sich auf mehrere Anordnungen ortsfester Sendestationen eines flächendeckendes Funknetzes sowie auf ein Verfahren zum Betrieb einer derartigen Anordnung.

Weiterhin umfaßt die Erfindung an die neuen Anordnungen angepaßte, ortsfeste Sendestationen sowie ein Verfahren zur nachträglichen Verdichtung eines bestehenden, flächendeckenden Funknetzes.

Zum Betrieb von Funktelefonen ist neben der betreffenden Mobilstation ein flächendeckendes Netz ortsfester Sendestationen erforderlich, um an jedem Ort des versorgten Gebietes einen störungsfreien Funkbetrieb zu gewährleisten - siehe z.B. EP-A-0 212 113.

Um einer Vielzahl voneinander unabhängiger Funkteilnehmer den gleichzeitigen Betrieb ihres Telefons zu ermöglichen, ist das Betreibergebiet in eine Vielzahl einzelner Funkzonen unterteilt, denen jeweils eine eigene, ortsfeste Sendestation zugeordnet ist. Indem aneinandergrenzenden Funkzonen unterschiedlicher Frequenzen zugewiesen sind, läßt sich eine für ein Funktelefon erkennbare Zuordnung zu je einer ortsfesten Sendestation bewerkstelligen. Wenn sich das Funktelefon auf eine spezielle Frequenz der aktuellen Funkzonen einstellt, ist die Funkkommunikation zu genau einer ortsfesten Sendestation gerichtet, von wo das Gespräch zu einem Funkkonzentrator weitergeleitet wird. Indem ein und dieselbe Sendefrequenz mehreren Funkzonen zugeordnet werden kann, die einen relativ großen Abstand voneinander aufweisen, lassen sich mit einer begrenzten Anzahl von Sendefrequenzen eine sehr große Anzahl von Gesprächen gleichzeitig übertragen.

Vernachlässigt man die durch Geländeunebenheiten, etc. verursachten Störungen, so setzt sich ein Funknetz aus einer Vielzahl in einer bestimmten Struktur angeordneter, ortsfester Sendestationen zusammen, deren gegenseitiger Abstand durch die von der Sendeleistung abhängige Reichweite bestimmt ist. Dagegen ist die räumliche Aufeinanderfolge unterschiedlicher Sendefrequenzen einerseits so gestaltet, daß jeweils benachbarten, ortsfesten Sendestationen unterschiedliche Frequenzen zugeteilt sind und darüber hinaus ein Mindestabstand bei ortsfesten Sendestationen eingehalten ist, welche die selben Sendefrequenzen benutzen, um Interferenzen mit Sicherheit ausschließen zu können.

Aus diesen Randbedingungen ergeben sich bestimmte Strukturen, welche sich zu einem flächendeckenden Gitter aneinanderreihen. Bei der Festlegung der Grundstruktur eines solchen Funknetzes gilt es, folgende Parameter zu optimieren:
Einerseits sollte die Anzahl der Funkzonen möglichst groß sein, ohne die Anzahl der ortsfesten Sendestationen zu erhöhen. Durch eine große Anzahl von Funkzonen läßt sich eine große Anzahl von Gesprächen gleichzeitig übertragen. Andererseits verursacht jede herkömmliche, ortsfeste Sendestation hohe Investitionskosten, welche das Funknetz erheblich verteuern. Hier ist im Stand der Technik vorgeschlagen worden, an jeder ortsfesten Sendestation anstelle einer ungerichteten Antenne drei gerichtete Antennen vorzusehen, welche jeweils einen Abstrahl- bzw. Empfangswinkel von etwa 120° abdecken, so daß die Anzahl der Funkzonen sich verdreifachen läßt. Eine solche Verfahrensweise erfordert jedoch einen stark erhöhten Antennen- und Einrichtungsaufwand.

Weiterhin läßt sich die zu bewältigende Teilnehmerkapazität dadurch erhöhen, daß die Anzahl der Kanäle pro Funkzone erhöht wird. Denn je mehr Kanäle in einer Funkzone vorhanden sind, desto mehr Teilnehmer können aus dieser Funkzone gleichzeitig telefonieren. Andererseits soll aber die Gesamtanzahl der Frequenzen nicht erhöht werden, da die zur Verfügung stehenden Sendefrequenzen aufgrund einer Vielzahl anderer Nachrichtenübertragungssysteme limitiert sind. Zur Realisierung hoher Kanalzahlen pro Funkzone müssen die Frequenzen in möglichst geringem Abstand wiederholt werden können. Um dieser Forderung gerecht zu werden, verwendet man gem. dem Stand der Technik ein hexagonales Gitter, bei dem die ortsfesten Sendestationen in zueinander parallelen Zeilen angeordnet sind, wobei die Sendestationen benachbarter Zeilen um jeweils einen halben Abstand in Zeilenrichtung gegeneinander versetzt sind. Hierbei haben die zugeordneten Funkzonen eine hexagonale Form, die sich sodann zu einem Netz ähnlich einer Vielzahl lückenlos aneinandergrenzender Bienenwaben ergänzen. In manchen Anwendungsfällen sind diese Grundflächen durch eine oben beschriebene Sektorisierung der Antennen weiter unterteilt. Bei der hexagonalen Struktur setzt sich ein elementares System aus sieben ortsfesten Sendestationen zusammen, die jeweils unterschiedliche Sendefrequenzen benötigen, da jede Funkzone an sechs weitere Funkzonen angrenzt.

Bei Verwendung derartiger, aus dem Stand der Technik bekannter Gitterstrukturen der ortsfesten Sendestationen eines flächendeckendes Funknetzes lassen sich die beiden, oben genannten Optimierungskriterien, nämlich das Produkt aus Funkzonenfläche und Anzahl der kostenintensiven, weil mit einem Funkkonzentrator gekoppelten Feststationen sowie das Verhältnis der Kanalanzahl pro Funkzone zur Gesamtzahl der Sendefrequenzen nicht verändern. Zwar kann die Fläche pro Funkzone pro Fläche durch Reduzierung der Sendeleistung reduziert werden, was jedoch gleichzeitig eine Erhöhung der Anzahl der Feststationen bedeutet. Da andererseits die Mindestanzahl der Funkzonen mit voneinander unterschiedlichen Sendefrequenzen vorgegeben ist (bspw. Siebenerstruktur), läßt sich die Anzahl der Kanäle pro Funkzone nur dadurch erhöhen, daß die Anzahl der Frequenzen insgesamt erhöht wird.

Aus diesen Nachteilen bekannter Anordnungen ortsfester Sendestationen eines flächendeckenden Funknetzes ergibt sich das der Erfindung zugrundeliegende Problem. Dieses besteht darin, die Grundstruktur des Netzes derart zu verändern, daß ohne Erhöhung der Anzahl der kostenintensiven, mit einem Funkkonzentrator gekoppelten, ortsfesten Sendestationen die Anzahl der Funkzonen pro Fläche vergrößert ist und/oder ohne Erhöhung der Gesamtzahl der Frequenzen des Funknetzes die Anzahl der Kanäle pro Funkzone heraufgesetzt werden kann.

Zu diesem Zweck sieht die Erfindung bei einer ersten Anordnung ortsfester Sendestationen eines flächendeckenden Funknetzes, welche zumindest teilweise mit Funkkonzentratoren gekoppelt sind, vor, daß jede, mit einem Funkkonzentrator gekoppelte, ortsfeste Sendestation von einer Mehrzahl weiterer, dezentraler Sendestationen umgeben ist, welche mit der zentralen Sendestation gekoppelt sind und einen oder mehrere Funkbereich(e) mit jeweils unterschiedlichen Sendefrequenzen bilden. Der Vorteil dieser Anordnung liegt darin, daß der Versorgungsbereich einer ortsfesten, mit einem Funkkonzentrator gekoppelten Sendestation durch die dezentralen Sendestationen vergrößert wird, ohne die Sendeleistung der zentralen, an einen Funkkonzentrator gekoppelten Sendestation zu erhöhen. Indem den dezentralen Sendestationen Funkbereiche mit unterschiedlichen Sendefrequenzen zugeordnet sind, läßt sich dadurch die Anzahl der Funkzonen pro Flächeneinheit erhöhen, ohne daß die Anzahl der an einen Funkkonzentrator gekoppelten Feststationen heraufgesetzt werden muß. Indem die dezentralen Sendestationen nicht mit einem Funkkonzentrator, sondern mit einer zentralen Sendestation gekoppelt sind, lassen sie sich sehr einfach und preisgünstig herstellen, wie weiter unten noch ausgeführt werden wird. Durch eine günstige Anordnung der ortsfesten Sendestationen und der dezentralen Sendestationen wird die Anzahl der benötigten Frequenzen für die Grundversorgung (1 Kanal/Funkzone) verringert (bspw. 2x1 + 4x1), so daß innerhalb einer elementaren Grundzelle (ca. 9fache Fläche einer einzelnen ortsfesten Funkstation) sogar alle Frequenzen benutzt werden können. Damit kann die Anzahl der Kanäle pro Flächeneinheit erhöht werden.

Es hat sich als günstig erwiesen, daß der (die) dezentralen Funkbereich(e) in ihrer Gesamtheit die zentrale(n) Funkzone(n) vollständig umgeben. Hierdurch ergibt sich einerseits eine Anordnung mit optimaler Versorgungsfläche, die etwa vier- bis zehnmal so groß sein kann wie der ursprüngliche oder zentrale Funkbereich. Somit läßt sich die Anzahl der an einen Funkkonzentrator gekoppelten, ortsfesten Sendestationen um einen entsprechenden Faktor reduzieren. Andererseits wird der zentrale Funkbereich vollständig von den dezentralen Funkbereichen umschlossen, so daß die Sendefrequenzen der zentralen Funkzone(n) bereits bei den nächstgelegenen, mit einem Funkkonzentrator gekoppelten Sendestationen wieder verwendet werden können.

Es hat sich als günstig erwiesen, daß die dezentralen Funkbereiche etwa ring- oder ringsektorförmige, durch etwa kreisbogenförmige und/oder polygonale Berandungslinien abgegrenzte Gestalt aufweisen. Die äußeren Funkbereiche bilden in ihrer Gesamtheit einen Ring, der die zentrale(n) Funkzone(n) umschließt, so daß die innere Berandungslinie der dezentralen Funkbereiche im Idealfall die Form eines Kreisbogens aufweist. Andererseits schließt sich an ein erfindungsgemäßes Funkgebiet die Summe der zentralen und dezentralen Funkbereiche einer zentralen, mit einem Funkkonzentrator gekoppelten Sendestation eine Mehrzahl identischer Funkgebiete an, welche das elementare Funkgebiet beispielsweise in Form eines schachbrettartigen oder wabenartigen Gitters zu einem flächendeckenden Netz vervielfältigen. Die äußeren Berandungslinien der Funkbereiche werden daher näherungsweise aus Geradenabschnitten gebildet. Im Rahmen der Erfindung können sowohl mehrere ringförmige Funkbereiche um die dezentrale(n) Funkzone(n) gruppiert sein und/oder durch unterschiedliche Frequenzzuweisungen einzelner dezentraler Sendestationen innerhalb eines Rings ringsektorförmige Funkbereiche geschaffen sein.

Es liegt im Rahmen der Erfindung, daß die Sendeleistung der Kanaleinheiten für die Flächenversorgung der dezentralen Sendestationen niedriger ist als die Sendeleistung(en) der Kanaleinheiten für die Flächenversorgung der zentrale(n) Funkzone(n). Hierdurch können die Abmessungen der dezentralen Sendestationen reduziert werden. Der Strombedarf ist gering und kann unter Umständen von einer nachladbaren Batterie gedeckt werden. Daraus ergeben sich niedrige Herstelungs- und Investitionskosten sowie weniger Probleme bei der Zulassung.

Eine sinnvolle Weiterbildung erfährt die Erfindung dadurch, daß mehrere benachbarte, dezentrale Sendestationen zu einem Funkbereich mit identischen Frequenzen zusammengefaßt sind. Sofern bspw. ein schachbrettartiges Gitter unter sich identischer Funkgebiete gewählt wird, haben die dezentralen Funkbereiche eine stark verzerrte Gestalt (Ecken eines Quadrats), so daß es günstiger ist, diese Bereiche mittels mehrerer, dezentraler Sendestationen abzudecken. Um dennoch die Anzahl der notwendigen Sendefrequenzen nicht zu erhöhen, empfiehlt es sich, benachbarten dezentralen Sendestationen die selben Frequenzen zuzuweisen und diese dadurch zu einem gemeinsamen Funkbereich zusammenzufassen. Eventuell auftretende Laufzeitunterschiede lassen sich kompensieren.

Es liegt im Rahmen der Erfindung, daß eine Vielzahl von aus je einer zentralen sowie aus mehreren dezentralen Sendestationen gebildeten Funkgebieten zu einem flächendeckenden Netz mit etwa rasterartiger und/oder hexagonaler Struktur aneinandergesetzt ist. Mittels derartiger schachbrett- und/oder wabenartiger Gitterstrukturen läßt sich das Gelände lückenlos abdecken.

Eine vorteilhafte Ausgestaltung liegt darin, daß sich die Sendestationen innerhalb jedes der aneinandergesetzten Funkgebiete an geometrisch etwa übereinstimmenden Relativpositionen zueinander befinden. Diese Übereinstimmungen sind auf die identische Grundstruktur jedes einzelnen, je einer mit einem Funkkonzentrator gekoppelten Sendestation zugeordneten Funkgebiets zurückzuführen. In der Praxis werden die Relativpositionen jedoch in gewissen Grenzen schwanken, da einerseits die Geländeform unterschiedlich ist und daher verschiedene Reichweiten der Sendestationen zur Folge hat, andererseits die lokalen, bei der Auswahl eines Standorts für eine dezentrale Sendestation zu beachtenden Gegebenheiten eine gewisse Flexibilität der Funkplanung erforderlich machen.

Es liegt im Rahmen der Erfindung, daß die Frequenzen der Antennen zur Flächenversorgung einander durch ihre geometrisch etwa übereinstimmenden Relativpositionen entsprechender Sendestationen unterschiedlicher Funkgebiete miteinander identisch sind. Indem nicht nur die geometrische Grundstruktur eines Funkgebiets wiederholt wird, sondern darüber hinaus auch die Sendefrequenzen der einzelnen Funkbereiche, läßt sich nicht nur die Anzahl der ortsfesten, mit einem Funkkonzentrator gekoppelten Sendestationen, sondern auch die Gesamtzahl der Sendefrequenzen auf ein Minimum begrenzen.

Es hat sich als günstig erwiesen, daß der dezentrale Teil eines Funkgebiets in mehrere, vorzugsweise vier Funkbereiche mit unterschiedlichen Sendefrequenzen unterteilt ist, wobei jedem Funkbereich etwa konstante Zentrumswinkel bezüglich der zentralen Sendestation zugeordnet sind. Um eine direkte, frequenzmäßige Vervielfachung eines elementaren Funkgebiets zu ermöglichen, ist zumindest der äußere Ring des Funkgebiets in mehrere, etwa ringsektorförmige Funkbereiche zu unterteilen; so daß beim Aneinandersetzen solcher Funkgebiete niemals zwei Funkbereiche mit identischen Sendefrequenzen aneinandergrenzen. Zu diesem Zweck empfiehlt sich bei einem schachbrettartigen Gitter, den äußeren Ring in vier Funkbereiche mit jeweils einem Zentrumswinkel von etwa 90° zu unterteilen, bei einer wabenartigen Gitterstruktur ist es dagegen sinnvoll, den äußeren Ring in sechs Funkbereichen unterschiedlicher Sendefrequenzen aufzuteilen, wobei ein Funkbereich etwa einen Zentrumswinkel von 60° bezüglich der zentralen, mit einem Funkkonzentrator gekoppelten Sendestation bedeckt.

Die Erfindung sieht weiterhin vor, daß die Kopplung der dezentralen Sendestationen mit der betreffenden, zentralen Sendestation eine drahtlose Punkt-zu-Punkt-Verbindung umfaßt. Hierdurch wird das Verlegen von Anschlußkabeln überflüssig, so daß die Installation einer dezentralen Sendestation ohne großen Aufwand erfolgen kann. Hierdurch werden die Investitionskosten erheblich gesenkt. Als Punkt-zu-Punkt-Verbindung sind nicht nur Richtfunkverbindungen im eigentlichen Sinn zu verstehen, sondern auch Verbindungen, bei denen die Antenne der zentralen Sendestation nur eine geringe oder gar keine Richtcharakteristik aufweist, um bspw. mehrere Antennen dezentraler Sendestationen eines Funkbereichs gleichzeitig anzusprechen.

Weitere Vorteile lassen sich dadurch erreichen, daß für jede Punkt-zu-Punkt-Verbindung zu einer dezentralen Sendestation an der zentralen Sendestation eine eigene, gerichtete Antenne und/oder eine optische Sende- und Empfangsvorrichtung vorhanden ist. Hier ist jede dezentrale Sendestation mittels einer eigenen Richtfunk- oder bspw. Laserübertragungsstrecke an die zentrale Sendestation angekoppelt.

Daneben ist auch eine Ausführungsform denkbar, bei der an der zentralen Sendestation für die Punkt-zu-Punkt-Verbindung zu mehreren dezentralen Sendestationen eine gemeinsame Antenne vorhanden ist. Hierdurch lassen sich Investitionskosten sparen.

Darüber hinaus ist es auch möglich, daß die gemeinsame Antenne für die Anbindung mehrerer dezentraler Sendestationen identisch mit der Antenne für die Flächenversorgung der zentralen Funkzone ist. Die Mit-Verwendung der Flächenversorgungs-Antenne der zentralen Funkzone(n) stellt die Anordnung mit dem geringsten Zusatzaufwand dar.

Es hat sich als günstig erwiesen, daß die Frequenzen der Punkt-zu-Punkt-Verbindungen sich von den Frequenzen für die Flächenversorgung der zentralen Funkzone(n) unterscheiden. Durch diese Maßnahme kann ausgeschlossen werden, daß aufgrund von Interferenzen mit dem Signal für die Flächenversorgung der zentrale(n) Funkzone(n) Störungen auftreten.

Es hat sich als sinnvoll erwiesen, daß die Sendeleistung der Punkt-zu-Punkt-Verbindungen niedriger ist als die Sendeleistung für die Flächenversorgung der zentrale(n) Funkzone(n). Bei der Verwendung gerichteter Antennen sowie hochwertiger Empfangseinrichtungen an beiden, miteinander kommunizierenden Sendestationen läßt sich die Sendeleistung reduzieren, um Störungen aufgrund von Überreichweiten auszuschließen. Andererseits kann eine Reduzierung der Sendeleistung bei Abstrahlung bspw. über die Antenne für die Flächenversorgung der zentralen Funkzone(n) dazu genutzt werden, einer Mobilstation aufgrund unterschiedlicher Empfangsfeldstärken eine Information zur Verfügung zu stellen, die zur Auswahl des Signals für die Flächenversorgung herangezogen werden kann.

Die Erfindung läßt sich dahin weiterbilden, daß die Frequenzen der Punkt-zu-Punkt-Verbindungen in einem Richtfunkfrequenzband oder in einem optischen Frequenzband liegen. Die Wahl derartiger Sendefrequenzen bietet sich aus technischen Gründen an.

Daneben ist es jedoch auch möglich, daß die Frequenzen der Punkt-zu-Punkt-Verbindungen im Netzbetreiberfrequenzbereich liegen. Hierdurch lassen sich eventuell weitere Gebühren für zusätzliche Richtfunkfrequenzen einsparen.

Bei Verwendung von Frequenzen des Netzbetreiberfrequenzbereichs können die Frequenzen der Punk-zu-Punkt-Verbindungen sich von den Frequenzen für die Flächenversorgung der betreffenden, dezentralen Funkzone unterscheiden. Dadurch können Rückkopplungen nahezu völlig ausgeschlossen werden, so daß ein störungsfreier Betrieb gewährleistet ist.

Dennoch ist auch eine derartige Ankopplung denkbar, daß die Frequenzen der Punkt-zu-Punkt-Verbindungen den Frequenzen für die Flächenversorgung der betreffenden, dezentralen Funkzone entsprechen. Hierbei ist aber darauf zu achten, daß die gerichtete Antenne der dezentralen Sendestation zur Ankopplung an die zentrale Sendestation räumlich von allen der Flächenversorgung dienenden Antennen derselben dezentralen Sendestation räumlich entfernt und/oder durch weitere Maßnahmen entkoppelt ist, um störende Rückkopplungen zu vermeiden.

Oftmals ist nicht ein neues Funknetz zu entwerfen, sondern ein bereits bestehendes Funknetz derart zu verdichten, daß aufgrund erhöhter Anzahl von Sendestationen nicht nur ein Betrieb eines Funktelefons im Freien (out-door-Betrieb), sondern auch ein Betrieb in geschlossenen Räumen (in-door-Betrieb) möglich ist. Hierbei stellt sich das Problem, eine geeignete Struktur zu finden, bei der möglichst sämtliche Standorte bereits bestehender, ortsfester Sendestationen weiterhin genutzt werden können und die Investitionskosten für die Schaffung zusätzlicher Einrichtungen an neuen Standorten so gering als möglich gehalten wird. Zur Lösung dieses Problems sieht die Erfindung ein Verfahren zur nachträglichen Verdichtung eines bestehenden, flächendeckenden Funknetzes mit ortsfesten Sendestationen, welche mit Funkkonzentratoren gekoppelt sind, vor, wobei jede bestehende Sendestation mit einer Mehrzahl dezentraler Sendestationen umgeben wird, welche mit der zentralen Sendestation gekoppelt werden und einen oder mehrere, die dezentrale(n) Funkzone(n) in deren Außenraum umgebende(n) Funkbereich(e) mit jeweils unterschiedlichen Sendefrequenzen bilden. Hierdurch läßt sich ohne mit der Installation herkömmlicher, an einen Funkkonzentrator gekoppelter, ortsfester Sendestationen verbundenem Aufwand auch in dem kritischen Außenraum jeder zentralen Funkzone eine für den in-door-Betrieb ausreichende Empfangsfeldstärke bewerkstelligen. Auf diese Art ist es ohne weiteres möglich, ein bereits bestehendes, flächendeckendes Funknetz durch Einfügung dezentraler Sendestationen zu einer der vorbeschriebenen erfindungsgemäßen Anordnungen eines flächendeckenden Funknetzes zu vervollständigen.

Die erfindungsgemäße Anordnung ortsfester Sendestationen eines flächendeckenden Funknetzes erfordert spezielle, ortsfeste Sendestationen sowohl für die zentralen, als auch für die dezentralen Sendestationen. Die zentralen, an einen Funkkonzentrator gekoppelten Sendestationen zeichnen sich dadurch aus, daß zusätzlich zu den Kanaleinheiten für die Flächenversorgung weitere Kanaleinheiten für die bidirektionale Informationsübertragung zu mindestens einer weiteren, ortsfesten Sendestation vorhanden sind. Gemäß der Erfindung werden die Signale für die Flächenversorgung der dezentralen Funkbereiche in der zentralen Sendestation generiert bzw. aufbereitet, so daß in den dezentralen Sendestationen nur eine Verstärkung, allenfalls kombiniert mit einer Frequenzumsetzung, zu erfolgen hat. Daher ist für jeden Kanal der äußeren Funkbereiche des Funkgebiets in der betreffenden zentralen Sendestation eine eigene Kanaleinheit vorhanden. Dabei besteht jede Kanaleinheit vorzugsweise aus einem Kontrollbaustein, zwei antiparallel gerichteten Sende- bzw. Empfangseinheiten sowie aus einer Filterbaugruppe.

Es liegt im Rahmen der Erfindung, daß die zusätzlichen Kanaleinheiten an zusätzliche, gerichtete Antennen und/oder optische Sende- und Empfangsvorrichtungen angeschlossen sind. Bei dieser Ausführungsform erfolgt die Ankopplung einer dezentralen Sendestation in Form einer echten, gerichteten Punkt-zu-Punkt-Verbindung.

Daneben ist es auch möglich, daß die zusätzlichen Kanaleinheiten an die Antenne(n) für die Flächenversorgung angeschlossen sind. Bei Verwendung unterschiedlicher Frequenzen können die an die dezentralen Sendestationen zu übertragende Signale auch über die Flächenversorgungs-Antenne(n) abgestrahlt bzw. empfangen werden, wenn die zusätzlichen Kanaleinheiten mit dieser Antenne verbunden sind.

Es hat sich als günstig erwiesen, daß die Sendeleistung der Sendeeinrichtungen der zusätzlichen Kanaleinheiten niedriger ist als die Sendeleistung der Sendeeinrichtung für die Flächenversorgung. Hierdurch ist - auch bei Verwendung einer Frequenz des Netzbetreiberfrequenzbandes zur Ankopplung der dezentralen Sendestationen - eine optimale Trennung infolge der reduzierten Empfangsfeldstärke möglich, so daß die Mobilstation das Signal für die Flächenversorgung eindeutig von dem Ankopplungssignal für eine dezentrale Sendestation unterscheiden kann.

Eine vorteilhafte Weiterbildung erfährt die Erfindung dadurch, daß für eine oder mehrere der zusätzlichen, gerichteten Antennen und/oder optischen Sende- und Empfangsvorrichtungen je ein Zeitglied vorhanden ist, das von der zusätzlichen Sendeeinrichtung gestartet wird und nach Ablauf seiner Zeitkonstante die zusätzliche Empfangseinrichtung aktiviert. Infolge des räumlichen Abstands der dezentralen, ortsfesten Sendestationen von der zentralen Sendestation addiert sich zu der vom Ort der Mobilstation abhängigen und daher variablen Laufzeit eines Signals zwischen der dezentralen Sendestation und der Mobilstation eine konstante Laufzeit, welche der Entfernung zwischen zentraler und dezentraler Sendestation entspricht. Sofern demnach ein Kontrollsignal von der zentralen Sendestation über eine dezentrale Sendestation an die Mobilstation gesendet wird, kann ein Antwortsignal frühestens um den doppelten Wert der konstanten Laufzeit zwischen den ortsfesten Sendestationen verzögert bei der zentralen Sendestation eintreffen. Diese konstante Verzögerung kann durch ein Zeitglied berücksichtigt werden, dessen Zeitkonstante etwa dem doppelten Wert der konstanten Laufzeit zwischen zentraler und dezentraler Sendestation entspricht. Bei Ankopplung mehrerer dezentraler Sendestationen über eine einzige Antenne der zentralen Sendestation ist es möglich, als Zeitkonstante des Zeitglieds einen minimalen oder mittleren Wert der unterschiedlichen, aber jeweils konstanten Laufzeiten der einzelnen, dezentralen Sendestationen zu verwenden.

Weiterhin zeichnet sich die Erfindung durch einen oder mehrere Auswahlschaltkreis(e) aus, um in Abhängigkeit von der Empfangsfeldstärke eines von mehreren der angekoppelten, ortsfesten Sendestationen übertragenen Signals die zugeordnete(n) Ankopplungsantenne(n) auszuwählen. Sofern die Funkzonen mehrerer, dezentraler Sendestation zu einem Funkbereich mit gemeinsamen Frequenzen zusammengefaßt sind, wird das Funksignal einer Mobilstation von derjenigen dezentralen Sendestation am stärksten empfangen, in deren Funkzone sich die Mobilstation gerade befindet. Daneben wird aber auch von den anderen Sendestationen dieses Funkbereichs ein abgeschwächtes Signal empfangen und an die zentrale Sendestation übertragen. Diese wählt mittels eines Auswahlschaltkreises diejenige Sendestation dieses Funkbereichs aus, deren Empfangsfeldstärke am höchsten liegt, und strahlt sodann das an die Mobilstation gerichtete Signal ausschließlich an die ausgewählte, dezentrale Sendestation ab. Hierdurch können Laufzeitunterschiede von unterschiedlichen, dezentralen Sendestationen herrührender Funksignale ausgeschlossen und somit die Übertragungsqualität verbessert werden. Das gleiche Verfahren kann man auch für den zentralen Funkbereich anwenden. Hierbei wird nur der Kontrollkanal über alle Sektoren des zentralen Funkbereichs ausgestrahlt, die Sprechkanäle dagegen nur über einen Sektor, wobei die Empfangsfeldstärke der einzelnen Sektorantennen als Auswahlkriterium herangezogen wird.

Es liegt im Rahmen der Erfindung, daß die zusätzlichen Kanaleinheiten mit einem Funkkonzentrator gekoppelt sind. Die systemmäßig den angekoppelten, dezentralen Sendestationen gegenüberliegenden Aus-/Eingänge der zusätzlichen Kanaleinheiten sind zur Weiterleitung der Telefongespräche den herkömmlichen Kanaleinheiten parallel geschalten und über eine Richtfunkverbindung und/oder über Kabel mit einem Funkkonzentrator verbunden.

Bei einer zur dezentralen Ankopplung geeigneten Sendestation ist zusätzlich zu der (den) Antenne(n) für die Flächenversorgung eine gerichtete Antenne oder optische Sende- und Empfangsvorrichtung für die bidirektionale Informationsübertragung zu einer weiteren, ortsfesten Sendestation vorhanden. Hierdurch entfällt das arbeits- und kostenintensive Verlegen eines Ankopplungskabels zwischen den voneinander entfernten, ortsfesten Sendestationen. Zumindest an den dezentralen Sendestationen sollte eine Antenne mit Richtcharakteristik eingesetzt werden, um die Sendeleistung für die Ankopplungsverbindung zur Vermeidung von Störungen so niedrig als möglich zu halten.

Es hat sich als günstig erwiesen, daß die beiden Antennen(gruppen) über zwei antiparallel geschaltete, frequenzselektive Verstärker miteinander gekoppelt sind. Entsprechend der bidirektionalen Informationsübertragung ist eine Verstärkung der Funksignale in beiden Richtungen notwendig. Die Unterscheidung der beiden Signalrichtungen erfolgt dabei überlicherweise anhand unterschiedlicher Frequenzen und wird durch den Verstärkern vorgeschaltete, frequenzselektive Bandpaß-Filter vorgenommen.

Gemäß der Erfindung ist zwischen der Frequenzfilterbaugruppe und dem nachgeschalteten Verstärker je ein Frequenzumsetzer eingefügt. Diese Ausführungsform ermöglicht die Verwendung unterschiedlicher Frequenzen für die Flächenversorgung der betreffenden, dezentralen Funkzonen sowie für die Ankopplung an die zentrale Sendestation, wodurch Rückkopplungen und somit Störungen mit großer Sicherheit ausgeschlossen sind.

Eine erfindungsgemäße Sendestation zur dezentralen Ankopplung weist weiterhin eine übergeordnete Baugruppe zur Konfiguration, Initialisierung und Überwachung auf. Diese Baugruppe soll vor allem den Service erleichtern und hat daher neben einer reinen Überwachungsfunktion während des Betriebs keinerlei Einfluß auf das zu übertragende Funksignal. Dieses wird von einer dezentralen Sendestation ausschließlich verstärkt sowie gegebenenfalls frequenzmäßig umgesetzt, ansonsten jedoch in unveränderter Form abgestrahlt.

Mit großem Vorteil können zur Stromversorgung einer derartigen, ortsfesten Sendestation für die dezentrale Ankopplung Solarzellen eingesetzt werden. Aufgrund der geringen Sendeleistungen sowie der Minimal-Konfiguration der Elektronikbaugruppen ist die Leistungsaufnahme einer derartigen, ortsfesten Sendestation zur dezentralen Ankopplung um ein Vielfaches geringer als die Leistungsaufnahme herkömmlicher, ortsfester Sendestationen. Bei Verwendung von Solarzellen ist eine derartige Sendestation völlig unabhängig, so daß nach dem Aufstellen an einen betreffenden Standort keinerlei Anschluß an irgendwelche Versorgungsleitungen notwendig ist. Das Aufstellen einer derartigen, dezentralen Sendestation ist daher äußerst arbeitsökonomisch.

Es hat sich als günstig erwiesen, daß alle Baugruppen mit Ausnahme der Antenne sowie ggf. Solarzellen in einem Gehäuse untergebracht sind, das als Standfuß für die Antenne(n) für die Flächenversorgung und/oder für die gerichtete Antenne dient. Dieser Standfuß hat vorzugsweise eine sehr flache Form mit einer Grundfläche von bspw. 1 qm und einer Höhe von etwa 20 cm. Wegen der geringen Zahl der notwendigen Baugruppen verbleibt insbesondere im Bereich des Gehäuserandes noch genügend Raum zur Aufnahme von Ballastelementen, welche die Standfestigkeit der Antenne(n) erhöhen.

Eine günstige Weiterbildung erfährt die Erfindung dadurch, daß die Antenne(n) für die Flächenversorgung über einen Steckmechanismus lösbar mit dem als Standfuß dienenden Gehäuse verbunden ist sind. Solchenfalls kann nach Ablegen des standfußartigen Gehäuses an einem günstigen Standort, bspw. auf dem Dach eines Hochhauses, die Flächenversorgungsantenne schnell in den Standfuß eingesteckt werden, so daß der mechanische Zusammenbau auf nur wenige Handgriffe beschränkt ist. Sodann ist allenfalls noch der elektrische Anschluß der Antenne vorzunehmen.

Schließlich entspricht es der Lehre der Erfindung, daß die gerichtete Antenne auf einer eigenen Befestigungsvorrichtung angeordnet und über ein Verbindungskabel an das Gehäuse angeschlossen ist. Um Rückkopplungen zu vermeiden, wird die gerichtete Antenne an einem um einige Meter entfernten Ort aufgestellt und benötigt dazu eine eigene Befestigungsvorrichtung. Nachdem auch diese Antenne an die Elektronik angeschlossen ist, sind allenfalls noch Justierungsarbeiten vorzunehmen.

Bei der vorstehend beschriebenen Anordnung kann es sich als ungünstig erweisen, daß die an dem Funkkonzentrator angekoppelten, ortsfesten Sendestationen eine eigene Funkzone besitzen, die von weiteren Funkbereichen umgeben ist. Hierdurch werden zusätzlich zu den für die äußeren Funkbereiche benötigten Frequenzen weitere unterschiedliche Frequenzen für die zentralen Funkzonen benötigt, so daß die obige Anordnung zwar gegenüber dem Stand der Technik bereits verbessert, insgesamt jedoch noch nicht optimal ist. Es ist daher ein besonderes Anliegen der Erfindung, ausgehend von der obigen Anordnung eine noch weitergehende Reduzierung der benötigten Frequenzen zu ermöglichen, ohne die mit der ersten Anordnung bereits erreichten Vorteile zu schmälern.

Zu diesem Zweck sieht die Erfindung bei einer Anordnung ortsfester Sendestationen eines flächendeckenden Funknetzes, dessen Fläche in eine Vielzahl von Funkbereichen mit jeweils einheitlichen Sendefrequenzen unterteilt ist, wobei jeweils aneinandergrenzende Funkbereiche mit unterschiedlichen Sendefrequenzen betrieben werden, vor, daß mindestens diejenigen Funkbereiche, die auf einem bestimmten Sendefrequenzbereich betrieben werden, aus jeweils mehreren Funkzonen gebildet sind, deren Flächen von jeweils einer ortsfesten Sendestation abgedeckt werden, wobei jede ortsfeste Sendestation ausschließlich einem Funkbereich zugeordnet ist.

Die Erfindung verzichtet also hierbei vollständig auf die Unterteilung eines elementaren Funkgebiets in ein Zentrum und eine dieses umgebende Peripherie. Die einzelnen Funkbereiche können daher - bspw. wie in einem Bienenwabennetz mit hexagonalen Zellen - direkt aneinander gefügt werden, ohne daß dazwischen zusätzliche, "zentrale" Funkbereiche angeordnet wären, die sich von allen umgebenden Funkbereichen frequenzmäßig unterscheiden müßten. Es hat sich herausgestellt, daß im Idealfall eine Anordnung erreicht werden kann, bei der nur jeweils drei Funkbereiche unterschiedliche Frequenzen benötigen, die sich in den weiteren, jedoch nicht direkt aneinandergrenzenden Funkbereichen periodisch wiederholen.

Indem die einzelnen Funkbereiche in jeweils mehrere Funkzonen unterteilt sind, die von jeweils einer ortsfesten Sendestation abgedeckt werden, kann die Sendeleistung der einzelnen Sendestationen weiter reduziert werden, so daß die Reichweite der in einem Funkbereich abgestrahlten Signale deutlich geringer ist als bei bisherigen Anordnungen, bei denen innerhalb eines derartigen Funkbereichs nur eine einzige Funkstation angeordnet war. Daher ist der Gleichfrequenzabstand, d.h. das Verhältnis der Empfangsfeldstärke eines in einem Funkbereich abgestrahlten Signals zu der Empfangsfeldstärke des von den Antennen des nächstliegenden Funkbereichs mit denselben Frequenzen abgestrahlten Signals, deutlich reduziert und ein störungsfreier Betrieb möglich. Bei Funkbereichen mit nur einer zentralen Sendeantenne sind dagegen die Störungen so groß, daß ein sinnvoller Funkbetrieb bisher überhaupt erst möglich war, wenn sich die Frequenzen nicht schon bei dem übernächsten Funkbereich, sondern erst in größeren Abständen wiederholten, so daß eine Vielzahl von unterschiedlichen Sendefrequenzen benötigt wurden. So haben in der Praxis verwendete, elementare Funkgebiete mindestens sieben, aber meistens noch deutlich mehr Funkbereiche mit jeweils unterschiedlichen Sendefrequenzen.

Schließlich ist es wichtig, daß jede ortsfeste Sendestation ausschließlich einem einzigen Funkbereich zugeordnet ist. Hierdurch ist es möglich, die einzelnen Sendestationen an dem jeweils für einen einzigen Funkbereich optimalen Standort aufzustellen, so daß die Standortsuche weitgehend unproblematisch ist. In besonders ungünstigen Fällen, wo an einem gewünschten Standort eine Aufstellung nicht möglich ist, kann Abhilfe dadurch geschaffen werden, daß eine oder mehrere, zusätzliche Sendestationen eingefügt werden, um verbleibende Funklöcher zu stopfen. Auch ist es möglich, an Punkten mit besonders hohem Verkehrsaufkommen zusätzliche, ortsfeste Sendesttionen zu installieren, um so einen besseren Gleichkanalabstand zu erzielen. Dies war beim bisherigen Stand der Technik mit jeweils nur einer einzigen Sendestation pro Funkbereich nur mit hohem Aufwand möglich, da hierfür eine zusätzliche Sendestation mit eigenen Sendefrequenzen notwendig war, die eine vollständige Änderung der Netzgeometrie erforderlich machte. Bei der vorliegenden Anordnung ändern sich dagegen weder die Sendefrequenzen der Funkbereiche noch die Nachbarschaftslisten.

Bei einer bevorzugten Ausführungsform der Erfindung, bei der die Funkbereiche eine etwa hexagonale Form aufweisen und sich zu einem Funknetz mit etwa wabenförmiger Struktur lückenlos aneinanderreihen, kann eine optimale Nutzung der Sendefrequenzen dadurch erfolgen, daß diese in insgesamt drei Bereiche eingeteilt sind, wobei jedem Funkbereich Sendefrequenzen ausschließlich aus einem dieser Sendefrequenz-Bereiche zugeordnet sind. Da die zur Verfügung stehenden Frequenzen in nur drei Bereiche unterteilt werden müssen, ergibt sich insgesamt eine sehr hohe Frequenzanzahl innerhalb eines Funkbereichs, so daß pro Funkbereich eine größere Anzahl von Kanälen genutzt werden kann. Gegenüber dem Stand der Technik, wo bei einem elementaren Funkgebiet mit bspw. zwanzig Funkbereichen unterschiedlicher Sendefrequenzen innerhalb jedes Funkbereichs max. nur etwa 5 % der gesamten, zur Verfügung stehenden Frequenzen verfügbar sind, kann damit eine Erhöhung des Wirkungsgrads auf 33 % erreicht werden.

Ein nahezu ebenso hoher Wirkungsgrad kann bei einem erfindungsgemäßen Funknetz dadurch erreicht werden, daß die Funkbereiche eine etwa rechteckige Form aufweisen und zu einem etwa schachbrettartigen Funknetz lückenlos aneinandergereiht sind. Denn in diesem Fall müssen die vorhandenen Senderfrequenzen insgesamt in nur vier Bereiche eingeteilt werden, wobei jedem Funkbereich Senderfrequenzen ausschließlich aus einem dieser Senderfrequenzen -Bereiche zugeordnet werden. Hiermit läßt sich immer noch ein Wirkungsgrad von 25 % erreichen.

Weitere Vorteile ergeben sich dadurch, daß die ortsfesten Sendestationen, die sich an der Peripherie eines Funkbereichs befinden, einen geringeren gegenseitigen Abstand aufweisen als im Zentrum des Funkbereichs angeordnete, ortsfeste Sendestationen. Sendestationen, deren Funkzone vollständig von Funkzonen mit demselben Frequenzbereich umgeben sind und demzufolge im Inneren eines Funkbereichs liegen, erfahren eine Verstärkung ihres Sendesignals durch die Abstrahlung der benachbarten Stationen, so daß sich ihre Reichweite erhöht, ohne daß hierfür eine größere Sendeleistung erforderlich ist. Da dieser Verstärkungseffekt bei den peripheren Funkzonen nicht vorhanden ist, weil hier zumindest teilweise Funkzonen mit anderen Kanälen angrenzen, muß entweder die Sendeleistung erhöht oder - falls dies nicht möglich ist - der Abstand zu den Sendestationen des benachbarten Funkbereichs verringert werden, damit die Empfangsfeldstärke in dem Grenzbereich zwischen den beiden Funkbereichen nicht unter einen Minimalwert absinkt.

Zusätzlich sieht die Erfindung vor, daß die ortsfesten Sendestationen, die sich am Rand eines Funkbereichs befinden, eine niedrigere Sendeleistung aufweisen als im Inneren des Funkbereichs angeordnete, ortsfeste Sendestationen. Diese Maßnahme bezweckt, die Gleichkanalstörungen zwischen den nächstgelegenen Funkbereichen mit denselben Frequenzen zu minimieren, indem die einander am nächsten plazierten, jeweils peripheren Sendestationen mit einer verringerten Sendeleistung betrieben werden. Zwar müssen dadurch die nächstgelegenen Sendestationen zweier benachbarter Funkbereiche noch weiter zusammenrücken; dies hat jedoch keine negativen Auswirkungen, da diese mit unterschiedlichen Frequenzen betrieben werden.

Die Erfindung läßt sich besonders günstig dahin weiter bilden, daß mehrere ortsfeste Sendestationen über eine zugeordnete, zentrale Station mit einem Funkkonzentrator gekoppelt sind. Hierdurch ist es möglich, den hardwaremäßigen Aufwand für die Ankoppelung der einzelnen Sendestationen herabzusetzen, so daß eine Erhöhung ihrer Anzahl wirtschaftlich sinnvoll realisiert werden kann.

Indem den zentralen Stationen, welche die Ankoppelung an den Funkkonzentrator bewerkstelligen, keine eigenen Funkzonen zugewiesen sind, wird es möglich, diese zentralen Stationen an Standorten aufzustellen, die ausschließlich nach dem Kriterium einer günstigen Anbindung der zugeordneten, ortsfesten Sendestationen ausgewählt sind. Es ergibt sich also nicht die bei der Hauptanmeldung potentiell vorhandene Schwierigkeit, die Standorte der zentralen Funkstation einerseits nach dem Kriterium der günstigen Anbindung der dezentralen Sendestationen, andererseits nach dem Kriterium einer möglichst optimalen Flächendeckung der inneren Funkzone auswählen zu müssen. Das verbleibende einzige Kriterium kann in den meisten Fällen ohne große Schwierigkeiten erfüllt werden. Im Fall eines günstigen Zusammentreffens kann auch eine ortsfeste und eine zentrale Sendestation an dem selben Standort aufgestellt sein, wobei eine Koppelung über Kabel möglich ist.

Weitere Vorteile lassen sich dadurch erzielen, daß jeder zentralen Station sämtliche ortsfesten Sendestationen eines oder mehrerer Funkbereiche zugeordnet sind. Hierdurch ist es möglich, daß für sämtliche, ortsfesten Sendestationen eines Funkbereichs gemeinsame Kanaleinheiten zur Ankoppelung an den Funkkonzentrator vorhanden sind, die innerhalb der zugeordneten, zentralen Station angeordnet sind. Diese Kanaleinheiten müssen demzufolge für jeden Funkbereich nur ein einziges Mal, und zwar in der zugeordneten, zentralen Station vorhanden sein. Dies ermöglicht eine Verringerung des Hardware-Aufwands.

Weiterhin hat es sich als günstig erwiesen, daß in den zentralen Stationen jeweils mindestens ein Laufzeitglied vorhanden ist, daß von der Sendeeinrichtung einer Kanaleinheit gestartet wird und nach Ablauf seiner Zeitkonstante die Empfangseinrichtung der betreffenden Kanaleinheit aktiviert.

Weiterhin ist es vorteilhaft, daß jede zentrale Station mit den zugeordneten, ortsfesten Sendestationen über eine Punkt-zu-Punkt-Verbindung oder über eine Fläche-zu-Punkt-Verbindung gekoppelt ist. Es kann sich hierbei um bidirektionale Funkverbindungen, Richtfunkverbindungen mit einer omnidirektionalen und einer gerichteten Antenne oder um optische Verbindungen mittels Laserstrahlen od. dgl. handeln.

Die Erfindung erfährt eine weitere Vereinfachung dadurch, daß für sämtliche ortsfesten Sendestationen eines Funkbereichs an der zentralen Station eine gemeinsame Antenne vorhanden ist. Hierbei kann es sich für denjenigen Funkbereich, innerhalb dem die betreffende, zentrale Station aufgestellt ist, um eine omnidirektionale Antenne handeln, während die Antenne zur Anbindung weiter entfernter Funkbereiche eine gerichtete Charakteristik aufweisen kann, die aber dennoch einen entsprechenden Abstrahlwinkel abdeckt, um sämtliche Sendestationen innerhalb dieses Funkbereichs anzusprechen.

Es liegt im Rahmen der Erfindung, daß die Anbindungsfrequenzen der ortsfesten Sendestationen an die zugeordnete zentrale Station den Frequenzen für die Flächenversorgung des betreffenden Funkbereichs entsprechen. In einem solchen Fall übernimmt eine ortsfeste Sendestation vor allem die Funktion der Signalverstärkung, so daß in einer derartigen, ortsfesten Sendestation die Anbindungsantenne und die Antenne für die Flächenversorgung über antiparallel geschaltete Verstärker direkt miteinander gekoppelt sein können.

Unterscheiden sich dagegen die Anbindungsfrequenzen der ortsfesten Sendestationen von den Frequenzen für die Flächenversorgung der betreffenenden Funkbereiche, liegen also die Anbindungsfrequenzen bspw. in einem Richtfunkband, so müssen die ortsfesten Sendestationen zusätzlich zu den zwischen Anbindungsantenne und Flächenversorgungsantenne antiparallel eingeschalteten Verstärker diesen jeweils vorgeschaltete Frequenzumsetzer aufweisen.

Für beide Ausführungsformen eignet sich eine Weiterbildung der Erfindung, wobei in einem oder beiden der antiparallel geschalteten Sende- und Empfangszweige ein Verzögerungsglied mit einstellbarer Zeitkonstante eingeschaltet ist. Insbesondere bei von der zugeordneten, zentralen Station, die die Ankoppelung an einen Funkkonzentrator bewerkstelligt, weiter entfernten Funkbereichen ergibt sich das Problem, daß die unterschiedlichen Sendestationen dieses Funkbereichs unterschiedliche Entfernungen zu der zugeordneten Anbindungsstation aufweisen können. Hierdurch können Laufzeitunterschiede auftreten, die innerhalb des Funkbereichs zu einer asynchronen Abstrahlung führen würden, so daß bspw. der erwünschte Verstärkungseffekt nicht eintritt. Dieser nachteiligen Folge wirkt die Erfindung dadurch entgegen, daß in den näher an der Anbindungsantenne aufgestellten Sendestationen eine stärkere Verzögerung eingestellt wird als in den entfernteren Sendestationen. Ddurch wird ein Signal von allen Sendestationen dieses Funkbereichs dennoch gleichzeitig abgestrahlt.

Um die soeben angesprochenen Laufzeitprobleme zu beheben, sieht die Erfindung vor, daß die Zeitkonstante eines Zeitglieds in der zentralen Station der Summe der doppelten Laufzeit zwischen der Zentralstation und der am weitesten entfernten, ortsfesten Sendestation, der doppelten Signallaufzeit durch eine ortsfeste Sendestation bei minimal eingestellter Verzögerungszeit, sowie einer fest vorgegebenen Reaktionszeit entspricht. Da bei der erfindungsgemäßen Anordnung teilweise relativ hohe Entfernungen zwischen einem Funkbereich und der dieser zugeordneten Anbindungsstation liegen können, muß der erhöhten Laufzeit auf dieser Strecke dadurch entsprochen werden, daß die Empfangseinrichtung einer Kanaleinheit erst nach Ablauf einer deutlich größeren Zeitkonstante aktiviert wird als bei bekannten Anordnungen, wo sich die Kanaleinheit direkt in der ortsfesten Sendestation befindet. Die erfindungsgemäße Zeitkonstante muß zusätzlich die der Entfernung zwischen Anbindungs- und ortsfester Sendestation entsprechende Laufzeit sowie die Signallaufzeit innerhalb der ortsfesten Sendestation berücksichtigen.

Außerdem muß eine Synchronisation der einzelnen, ortsfesten Sendestationen eines Funkbereichs dadurch vorgenommen werden, daß die Verzögerung jedes der beiden Verzögerungsglieder einer ortsfesten Sendestation auf die Differenz aus der Laufzeit zwischen der zentralen Station und der am weitesten entfernten, ortsfesten Sendestation desselben Funkbereichs einerseits minus der Laufzeit zwischen der zentralen Station und der betreffenden, ortsfesten Sendestation andererseits eingestellt wird. Indem die Verzögerung gleichmäßig auf zwei Verzögerungsglieder aufgeteilt wird, von denen eines in den Sendezweig und das andere in den Empfangszweig eingeschaltet ist, wird erreicht, daß sowohl das an eine Mobilstation gerichtete, flächendeckende Signal von allen ortsfesten Funkstationen desselben Funkbereichs gleichzeitig abgestrahlt wird, so daß der vorteilhafte Überlagerungseffekt eintritt. Andererseits wird auch das gerichtete Funksignal zur Anbindungsstation von allen beteiligten ortsfesten Sendestationen gleichzeitig ausgesendet, so daß auch hier eine Signaladdition auftritt und zumindest ein höherer Signal-/Rauschabstand erreicht werden kann.

Eine für das erfindungsgemäße Funknetz-Konzept geeignete, ortsfeste Sendestation, die mit einer Anbindungsantenne sowie mit einer Antenne für die Flächenversorgung versehen ist, wobei diese Antennen über zwischen den Antennenfiltern antiparallel geschaltete Sende- und Empfangszweige aus je einem Verstärker sowie ggf. einem Frequenzumsetzer miteinander gekoppelt sind, zeichnet sich dadurch aus, daß in den Sende- und/oder Empfangszweig ein Verzögerungsglied mit einstellbarer Zeitkonstante eingeschaltet ist. Hierdurch ergibt sich eine universell verwendbare Sendestation, bei der die den unterschiedlichen Abständen zu der Anbindungsstation entsprechende Verzögerungszeit individuell eingestellt werden kann.

Damit sowohl eine Synchronisation der von den ortsfesten Sendestationen eines Funkbereichs abgestrahlten flächendeckenden Funksignalen wie auch der Anbindungsfunksignale erreicht wird, sieht die Erfindung weiterhin vor, daß zwei Verzögerungsglieder mit einstellbarer Zeitkonstante vorhanden sind, von denen eines in den Sende- und eines in den Empfangskreis eingeschaltet ist. Mit Hilfe dieser beiden Verzögerungsglieder wird die unterschiedliche Signallaufzeit jeweils in einer Übertragungsrichtung kompensiert.

Es liegt im Rahmen der Erfindung, daß die beiden Verzögerungsglieder an den mit der Anbindungsantenne gekoppelten Ein- und/oder Ausgängen der Sende- und Empfangszweige eingeschaltet sind.

Insbesondere für den Nahbereich einer Anbindungsstation, also denjenigen Funkbereich, in dem die Anbindungsstation aufgestellt ist, kann ein Laufzeitausgleich jedoch entbehrlich sein, da hier die Laufzeitunterschiede geringer sein können. In einem solchen Fall kann auch die Zeitkonstante des Zeitglieds in der Anbindungsstation relativ gering bemessen werden.

Unabhängig von dem Vorhandensein eines oder mehrerer Verzögerungsglieder in dem Sende- und Empfangszweig einer ortsfesten Sendestation kann es sich als günstig erweisen, daß in dem Empfangszweig ein die Feldstärke des empfangenen Signals erfassender Detektor angeordnet ist, der bei Überschreiten eines Schwellwerts einen in den Sendezweig eingefügten Schalter schließt. Diese Maßnahme ermöglicht es, definiert nur diejenigen Sendestationen eines Funkbereichs zu aktivieren, in deren Funkzone sich tatsächlich eine Mobilstation befindet, da nur hier ein Funkkontakt benötigt wird. Durch das Abschalten der übrigen Sendestationen wird die insgesamt abgestrahlte Sendeleistung reduziert, so daß die Gleichkanalstörungen zu den nächstgelegenen Funkbereichen mit derselben Frequenz deutlich herabgesetzt sind.

Hierbei ist es sinnvoll, daß der Schwellwert bei oder geringfügig unterhalb derjenigen Empfangsfeldstärke liegt, die dem Signal einer an der Peripherie der betreffenden Funkzone befindlichen Mobilstation entspricht. Hierdurch kann der erfindungsgemäße Feldstärkedetektor zuverlässig feststellen, ob sich die betreffende Mobilstation innerhalb seiner Funkzone befindet, so daß eine lückenlose Funkübertragung gesichert ist. Sofern sich eine Mobilstation in dem Grenzbereich zwischen zwei Funkzonen befindet, wird sie von beiden Detektoren dieser aneinander grenzenden Funkzonen erkannt und beide Sendestationen werden aktiviert. Damit ergibt sich der oben bereits angesprochene Verstärkungseffekt innerhalb dieses Grenzbereichs, so daß auch bei einem derartigen "Mobile-Tracking" die vorteilhafte Signalverstärkung aufrechterhalten bleibt.

Es hat sich als günstig erwiesen, daß der Schalter von dem Empfangsfeldstärkedetektor bei Unterschreiten eines weiteren Schwellwerts geöffnet wird. Wenn dieser zweite Schwellwert unterhalb des ersten Schwellwerts liegt, so ergibt sich eine Hysterese, die für einen stabilen Betrieb auch in dem Randbereich einer Funkzone sorgt.

Weitere Merkmale, Einzelheiten und Vorteile auf der Basis der Erfindung ergeben sich aus der folgenden Beschreibung einiger Ausführungsbeispiele der Erfindung sowie anhand der Zeichnung. Diese zeigt in:
- Fig. 1: ein erfindungsgemäßes Funkgebiet mit etwa hexagonaler Grundform,
- Fig. 2: eine andere Ausführungsform eines erfindungsgemäßen Funkgebiets mit etwa quadratischer Grundform, an zwei Berandungslinien durch identische Funkgebiete zu einem flächendeckenden Netz ergänzt,
- Fig. 3: das Funknetz aus Fig. 2 in einem anderen Maßstab, wobei der Übersichtlichkeit halber die dezentralen Funkzonen nicht dargestellt sind,
- Fig. 4: ein Blockschaltbild einer zentralen sowie einer dezentralen Funkstation,
- Fig. 5: einen Ausschnitt des Blockschaltbilds einer weiteren Ausführungsform einer zentralen Sendestation,
- Fig. 6: eine perspektivische Darstellung einer dezentralen Sendestation,
- Fig. 7: einen Ausschnitt aus einem Funknetz gemäß einer weiteren Ausführungsform der Erfindung,
- Fig. 8: einen Ausschnitt aus dem Funknetz einer wiederum abweichenden Ausführungsform der Erfindung,
- Fig. 9: eine Funkzone an der Peripherie eines Funkbereichs,
- Fig. 10a: die von der Anbindungsstation eines Funkbereichs abgestrahlten Signale über der Zeitachse aufgetragen,
- Fig. 10b: eine der Fig. 10a entsprechende Darstellung der von der selben Anbindungsstation empfangenen Antwortsignale, sowie
- Fig. 11: ein Blockschaltbild einer ortsfesten Sendestation für eine erfindungsgemäße Anordnung.

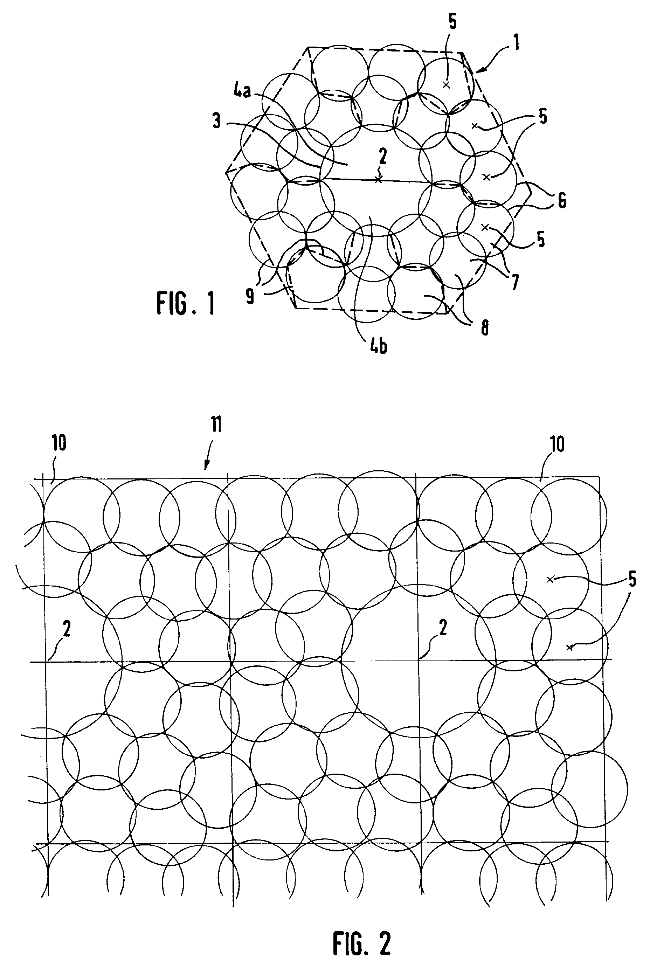

In Fig. 1 ist ein elementares Funkgebiet 1 wiedergegeben, welches sich durch Aneinanderreihung identischer Funkgebiete 1 zu einem flächendeckenden Funknetz mit etwa wabenförmiger Struktur ergänzen läßt. Im Zentrum des Funkgebiets 1 befindet sich eine ortsfeste Sendestation 2, welche über Kabel oder Richtfunk mit einem nicht dargestellten Funkkonzentrator gekoppelt ist. Mittels zweier direktionaler Antennen mit der Reichweite 3 versorgt die zentrale Sendestation 2 die inneren Funkzonen 4a und 4b. Innerhalb der Funkzonen 4a oder 4b kommuniziert eine nicht dargestellte Mobilstation direkt mit der zentralen Sendestation 2.

In dem in Fig. 1 gezeichneten Fall ist die zentrale Sendestation 2 von dezentralen Sendestationen 5 umgeben, welche jeweils identische Reichweiten 6 aufweisen. Bei der in Fig. 1 wiedergegebenen Anordnung sind die Reichweiten 6 der dezentralen Funkstationen 5 etwa halb so groß wie die Reichweite der zentralen Funkstation 2, was sich durch geeignete Dimensonierung der Sendeleistungen ergibt. Dadurch haben die im Idealfall kreisförmigen Funkzonen 7 der dezentralen Sendestationen 5 etwa den halben Radius wie die zentrale Funkzone 4a, 4b. Die dezentralen Sendestationen 5 sind derart angeordnet, daß sich ihre Funkzonen 7 zu zwei, die zentrale Funkzone 4a, 4b konzentrisch umgebenden Ringen ergänzen.

In den dezentralen Funkzonen 7 erfolgt die Kommunikation zu einer Mobilstation über andere Sendefrequenzen als in der inneren Funkzone 4a, 4b. Jedoch hat gem. einer vorzugsweisen Erfindungsausbildung nicht jede der dezentralen Funkzonen 7 eigene Sendefrequenzen. Vielmehr können jeweils mehrere, benachbarte Sendestationen 5 zu Funkbereichen 8 zusammengefaßt sein, deren Umrandungslinien 9 in Fig. 1 gestrichelt angedeutet sind. Die dezentralen Sendestationen 5 der jeweils dem selben Funkbereich 8 zugeordneten Funkzonen 7 kommunizieren mit den Mobilstationen auf identischen Sendefrequenzen. Das in Fig. 1 wiedergegebene Funkgebiet 1 weist demnach zwei zentrale sowie sechs dezentrale Funkbereiche 4a, 4b, 8 auf, in denen paarweise unterschiedliche Sendefrequenzen verwendet werden. Jedoch können beliebig viele Funkgebiete 1 zu einem wabenförmigen Funknetz aneinandergereiht werden, wobei die Aufteilung der einzelnen Funkgebiete 1 in Funkbereiche 8 sowie die Frequenzzuweisungen in den einzelnen Funkbereichen 8 völlig identisch sein können.

In Fig. 2 ist ein Funkgebiet 10 mit abweichender Grundstruktur wiedergegeben. Auch hier ist eine zentrale Sendestation 2 von dezentralen Sendestationen 5 etwa ringförmig umgeben. Jedoch hat das Funkgebiet 10 im Gegensatz zu dem Funkgebiet 1 keine hexagonale, sondern eine etwa quadratische Grundform. Zur Ausbildung eines flächendeckenden Funknetzes 11 werden eine Vielzahl quadratischer Funkgebiete 10 zu einem rechtwinkligen Gitternetz aneinandergereiht. Wie man aus Fig. 2 erkennt, ergänzen sich hierbei die Funkzonen 7 der einzelnen, dezentralen Sendestationen 5 zu einem etwa gleichmäßig geschlossenen Funknetz 11.

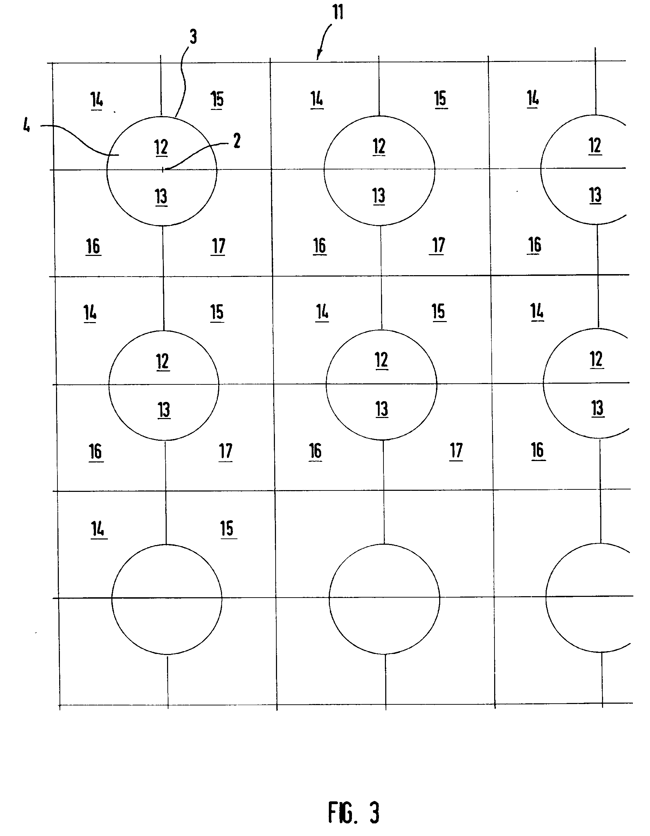

In Fig. 3 ist ein größerer Ausschnitt des Funknetzes 11 dargestellt, wobei die einzelnen Funkzonen 7 nicht mehr eingezeichnet sind, sondern nur noch die Funkbereiche 12-17, innerhalb denen jeweils konstante Sendefrequenzen verwendet werden. Wie man erkennt, grenzt keiner dieser Funkbereiche 12-17 an einen weiteren Funkbereich 12-17 mit identischen Sendefrequenzen an. Bei diesem Ausführungsbeispiel ist der Funkbereich der zentralen Sendestationen 2 mit Hilfe von je zwei gerichteten 180°-Antennen in zwei Funkzonen 12, 13 unterschiedlicher Sendefrequenzen aufgeteilt, um eine größere Reichweite 3 des zentralen Funkbereichs 4 zu erzielen. Man erhält somit insgesamt sechs unterschiedliche Funkbereiche 12-17 mit jeweils paarweise verschiedenen Sendefrequenzen.

Wie man aus Fig. 2 erkennt, entspricht die Fläche der Funkzonen 4a, 4b der kostenintensiven, mit einem Funkkonzentrator gekoppelten Sendestationen 2 etwa einem Neuntel der Gesamtfläche. Demzufolge läßt sich die Anzahl dieser kostenintensiven Sendestationen etwa auf ein Neuntel reduzieren, was die Mehrkosten für die sehr einfachen, dezentralen Sendestationen mehr als wett macht. Darüber hinaus ist die Gesamtzahl der Funkbereiche paarweise unterschiedlicher Sendefrequenzen mit insgesamt sechs deutlich geringer als bei herkömmlichen Gitterstrukturen, wo die hexagonalen Funkgebiete einer Sendestation durch Verwendung gerichteter 120°-Antennen in drei Sektoren unterteilt ist, so daß insgesamt zwölf (Viererstruktur mit jeweils 3 Sektoren) bis einundzwanzig (Siebenerstruktur mit jeweils 3 Sektoren) Funkbereiche mit paarweise unterschiedlichen Sendefrequenzen gebildet werden.

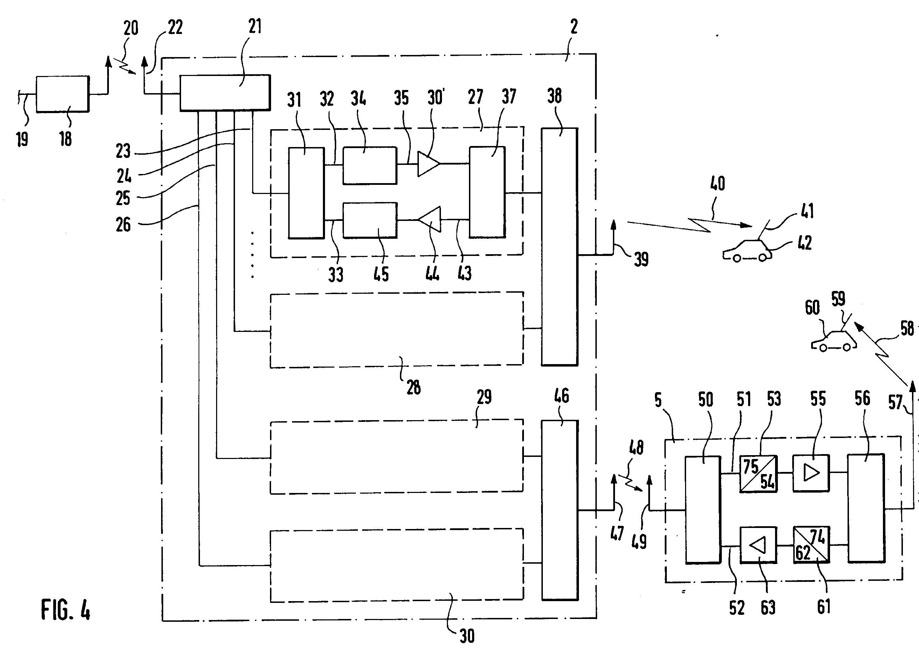

Fig. 4 zeigt ein Blockschaltbild einer zentralen Sendestation 2 und ausnahmsweise nur einer dezentralen Sendestation 5. Am linken oberen Eck der Fig. 4 ist ein Funkkonzentrator 18 wiedergegeben, der bspw. an eine mobile Vermittlungsstelle angeschlossen ist.

Der Funkkonzentrator 18 kommuniziert über eine Richtfunkverbindung 20 mit der zentralen Sendestation 2. In dieser Sendestation 2 ist ein Schnittstellenbaustein 21 vorhanden, der das von der Richtfunkantenne 22 empfangene Signal in einzelne Übertragungskanäle 23 bis 26 aufspaltet.

An jeden Übertragungskanal 23-26 ist je eine Kanaleinheit 27 bis 30 angeschlossen.

Jede Kanaleinheit 27-30 umfaßt eine Anschlußbaugruppe 31, welche eine Auftrennung des betreffenden Kanals 23-26 je nach Übertragungsrichtung vornimmt und demzufolge zwei down-link-seitige Anschlüsse 32, 33 aufweist. Der Anschluß 32, der die vom Funkkonzentrator 18 ankommenden Signale bereitstellt, ist mit einem Kodierer 34 verbunden, dessen Ausgangssignal 35 über einen Verstärker 36 einer Bandpaß-Filterbaugruppe 37 zugeleitet wird, von wo das Signal die Kanaleinheit 27 verläßt und zu einem sog. Combiner 38 geführt ist, um mit den Ausgangssignalen anderer Kanaleinheiten 28 zusammengefaßt und zu einer Antenne 39 zur Flächenversorgung des zentralen Funkbereichs übertragen zu werden.

Über eine Luftschnittstelle 40 gelangt dieses Sendesignal zur Antenne 41 einer Mobilstation 42, bspw. in Form eines Autotelefons. Das Antwortsignal der Mobilstation 42 wird in umgekehrter Richtung über die Luftschnittstelle 40 zur Empfangsvorrichtung 39 der zentralen Sendestation 2 übermittelt, wo es über den Combiner 38 der betreffenden Kanaleinheit 27, 28 zugewiesen wird.

In der Bandpaß-Filterbaugruppe 37 wird das Empfangssignal 43, das eine andere Frequenz aufweist als das Sendesignal 35, von diesem abgetrennt und an den Eingang eines Verstärkers 44 gelegt. Dieser ist ausgangsseitig mit einem Dekodierer 45 verbunden, in welchem das empfangene Signal aufbereitet und über den Anschluß 33 der Anschlußbaugruppe 31 des betreffenden Übertragungskanals 23, 24 zugeführt wird. Über den Schnittstellenbaustein 21, die Richtfunkverbindung 20, den Funkkonzentrator 18 und die mobile Vermittlungsstelle 19 wird das Antwortsignal in das postalische Telefonnetz eingespeist. Die Versorgung des zentralen Funkbereichs 4a, 4b unterscheidet sich, abgesehen von einer geringeren Sektorisierung, kaum von herkömmlichen Sendeeinrichtungen.

Im Gegensatz zu diesen sind bei der erfindungsgemäßen, zentralen Sendestation 2 jedoch weitere Kanaleinheiten 29, 30 vorgesehen, die an entsprechende Übertragungskanäle 25, 26 des Schnittstellenbausteins 21 angeschlossen sind. Diese Kanaleinheiten unterscheiden sich in der Grundausstattung nicht von herkömmlichen Kanaleinheiten 27, 28, haben jedoch abweichende Sende- und Empfangsfrequenzen. Sie sind ausgangsseitig über einen Combiner 46 mit einer Sende- und Empfangsvorrichtung 47 gekoppelt.

Im Gegensatz zu der Sende- und Empfangsvorrichtung 39 für die zentrale Funkzone 4 wird hier jedoch eine Antenne 47 mit stark gerichteter Charakteristik verwendet, so daß die Luftschnittstelle 48 als echte Richtfunkverbindung ausgeführt ist, wobei auch die up-link-seitige Sende- und Empfangsvorrichtung 49 der dezentralen Sendestation 5 eine entsprechende, gerichtete Antenne aufweist.

Die gerichtete Antenne 49 ist mit einer Bandpaß-Filterbaugruppe 50 verbunden, die anhand der unterschiedlichen Frequenzen das von der zentralen Sendestation 2 ankommende Signal 51 von dem zur zentralen Sendestation 2 gerichteten Signal 52 unterscheidet. Das Sendesignal 51 wird einem Frequenzumsetzer 53 zugeführt, dessen Ausgangsfrequenz 54 der Sendefrequenz des betreffenden Funkbereichs 8 entspricht. Das Sendesignal mit der Frequenz 54 wird nun in einem Verstärker 55 auf eine Sendeleistung verstärkt, welche die notwendige Reichweite 6 garantiert, und über einen ausgangsseitigen Bandpaß-Filterbaustein 56 sowie eine nachgeschaltete Sende- und Empfangsvorrichtung 57, abgestrahlt. Über die Luftschnittstelle 58 gelangt dieses Sendesignal zur Antenne 59 einer Mobilstation 60, welche sich gerade innerhalb der Funkzone 7 dieser dezentralen Sendestation 5 befindet.

Das Antwortsignal dieser Mobilstation 60 wird von der Empfangsvorrichtung 57 aufgefangen und von der Bandpaß-Filterbaugruppe 56 von dem verstärkten Sendesignal 54 abgetrennt. Daraufhin wird es von einem weiteren Frequenzumsetzer 61 in einen Frequenzbereich 62 transformiert, der für die Richtfunk-Verbindung 48 verwendet wird. Nach Verstärkung durch den Verstärker 63 wird dieses Signal 52 über den eingangsseitigen Bandpaß-Filter 50 der Richtfunkantenne 49 zugeleitet. Das von dieser abgestrahlte Signal 48 wird von der komplementären Richtfunkantenne 47 der zentralen Sendestation 2 empfangen und von dort in dem Combiner 46 der entsprechenden Kanaleinheit 29 zugewiesen, wo es abgesehen von anderen Übertragungsfrequenzen genauso aufbereitet wird wie das von der Antenne 39 empfangene Signal 40 in der inneren Funkzone 4. Das Antwortsignal gelangt über den Schnittstellenbaustein 21, die Richtfunkverbindung 20 und den Funkkonzentrator 18 ins Telefonnetz.

Zusätzlich zu dieser Standard-Variante kann in den mit einer dezentralen Sendestation 5 kommunizierenden Kanaleinheiten 29, 30 ein Zeitglied eingebaut sein, welches von dem Dekodierer 34 gestartet wird und erst nach Ablauf des eingestellten Zeitintervalls den Kodierer 45 aktiviert, um die konstanten Laufzeiten auf der Richtfunkstrecke 48 zu kompensieren.

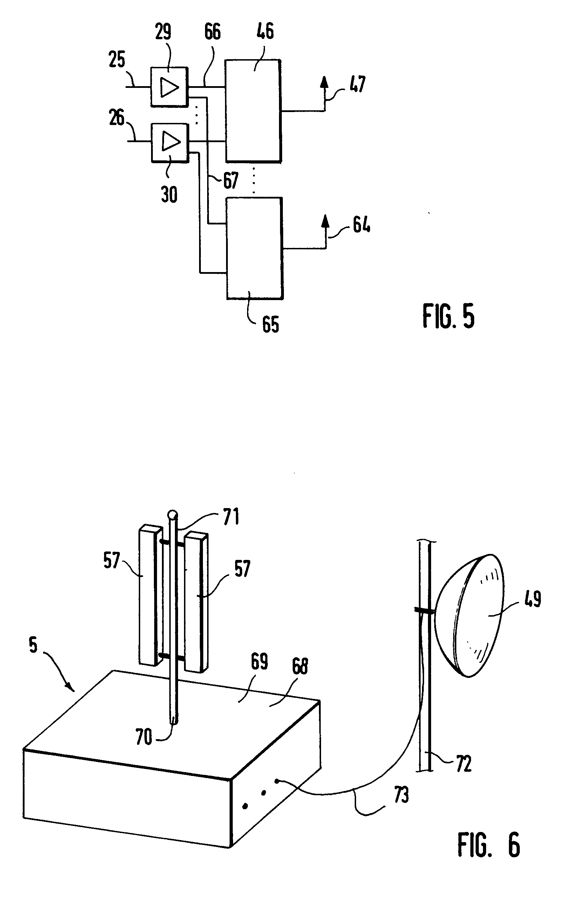

In dem Fall, daß mehrere, dezentrale Funkzonen 7 zu je einem Funkbereich 8 zusammengefaßt sind, können sämtliche derart zusammengefaßten Sendestationen 5 über eine gemeinsame Antenne 47 der zentralen Sendestation 2 angesprochen werden. Daneben ist es jedoch auch möglich, für jede der dezentralen Sendestationen 5 eine eigene, gerichtete Antenne 47, 64 vorzusehen (vgl. Fig. 5). Zur Übertragung mehrerer Kanäle 25, 26 muß jeder dieser gerichteten Antennen 47, 64 ein eigener Combiner bzw. Koppler 46, 65 vorgeschalten sein.

Zur Vermeidung von störenden Interferenzen sind in den zusätzlichen Kanaleinheiten 29, 30 in Fig. 5 nicht dargestellte Auswahlschaltkreise integriert, welche die auf unterschiedlichen Empfangsfeldstärken zurückzuführenden Signalamplituden auf den down-link-seitigen Eingängen 66, 67, welche unterschiedlichen Richtfunkantennen 47, 64 und damit unterschiedlichen Sendestationen 5 zugeordnet sind, miteinander vergleichen und beim down-link-seitigen Senden nur diejenige Sendeantenne 47, 64 auswählen, bei der die höchste Empfangsfeldstärke registriert wurde. Solchermaßen wird trotz Zusammenfassung mehrerer Funkzonen 7 zu einem gemeinsamen Funkbereich 8 immer nur diejenige Sendestation 5 aktiviert, in deren Funkzone 7 sich die Mobilstation 60 gerade befindet. Somit wird die Überlagerung mehrerer Signale derselben Frequenz auf der Luftschnittstelle 58 vermieden.

Eine konstruktive Ausgestaltung einer dezentralen Sendestation 5 zeigt Fig. 6. Ein flaches Gehäuse 68 mit einer Grundfläche von etwa 1 qm und einer Höhe von etwa 20 cm weist etwa mittig auf seiner Oberseite 69 eine Einsteckvorrichtung 70 für einen Sendemast 71 auf, an welchem sich zwei Sende- und Empfangsantennen 57 mit jeweils 180°-Richtcharakteristiken befinden. Diese Antennen 57 sind in entgegengesetzte Richtungen gerichtet, so daß sie insgesamt eine Funkzone 7 mit etwa kreisförmigem Umfang abdecken. Zur Reduzierung von Interferenzen können die Antennen 57 um einen geringen Winkel nach unten konvergierend geneigt sein. Der Anschluß der Antennen 57 an das Gehäuse 68 erfolgt mittels nicht dargestellter Verbindungskabel.

Eine gerichtete Sende- und Empfangsantenne 49 für die Luftschnittstelle 48 zu einer zentralen Sendestation 2 ist auf einem beabstandet aufgestellten Pfosten 72 montiert und wird über ein Verbindungskabel 73 an das Gehäuse 68 angeschlossen. Aufgrund der geringen Sendeleistungen der Antennen 49, 57 sowie der Minimalkonfiguration der Elektronikbaugruppen innerhalb der Sendestation 5 kann die Stromversorgung mittels Solarzellen sichergestellt werden, welche auf der Oberseite 69 des Gehäuses 68 aufliegend angeordnet sind.

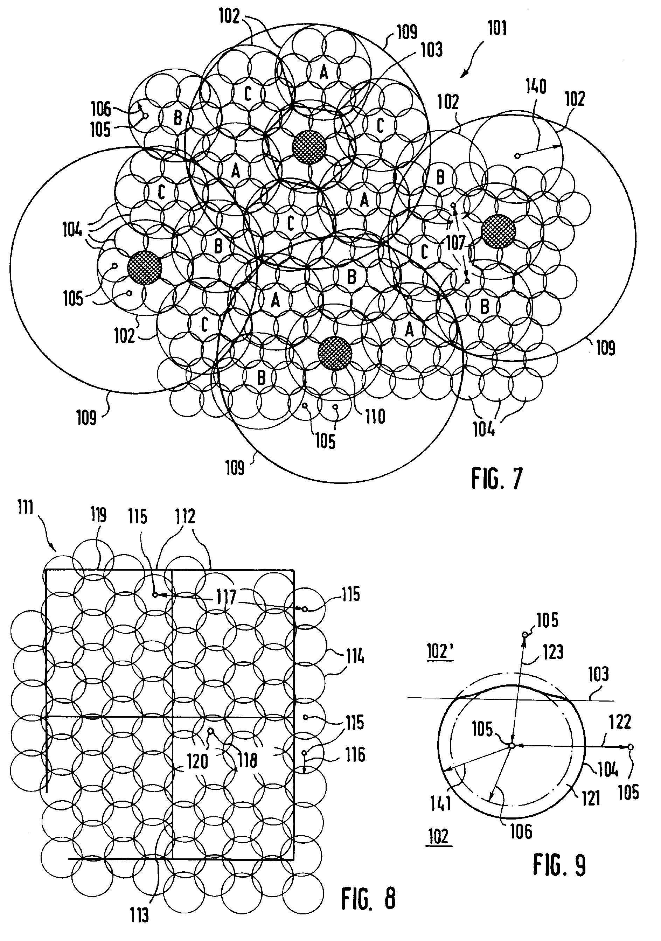

In Fig.7 ist ein Ausschnitt aus einem Funknetz 101 wiedergegeben. Man erkennt eine Vielzahl von Funkbereichen 102, die sich derart lückenlos aneinander fügen, daß ein einzelner Funkbereich etwa die hexagonale Form einer einzelnen Bienenwabe 103 annimmt. Jedem Funkbereich 102 läßt sich ein Kreis mit dem Radius 140 umbeschreiben.

Jeweils aneinander grenzende Funkbereiche 102 weisen unterschiedliche Frequenzen auf. So können bspw. die mit A gekennzeichneten Funkbereiche 102 in einem ersten Sendefrequenzbereich betrieben werden, die mit dem Zeichen B versehenen Funkbereiche 102 werden in einem zweiten Sendefrequenzbereich betrieben, und die durch C hervorgehobenen Funkbereiche 102 senden in einem dritten Sendefrequenzbereich. Wie man sieht, sind demnach drei Sendefrequenzbereiche A, B und C ausreichend, um ein Funknetz 101 mit lückenlos aneinander grenzenden Funkbereichen 102 zu schaffen, bei denen jeweils benachbarte Funkbereiche 102 unterschiedlichen Sendefrequenzbereichen A, B oder C zugeordnet sind.

Bei der in Fig. 7 wiedergegebenen Ausführungsform ist jeder Funkbereich 102 in insgesamt sieben Funkzonen 104 unterteilt. Dies ist jedoch nicht zwingend. Denn die Funkzonen 104 müssen innerhalb eines Funkbereichs 102 nicht nach einem vorgegebenen geometrischen Raster angeordnet werden, sondern werden so aneinander gereiht, daß eine lückenlose Versorgung des gesamten Funkbereichs 102 gewährleistet ist. Auch ist es möglich, größere Funkbereiche 102 zu schaffen, bei denen eine zentrale Funkzone 104 nicht von einem einzigen Ring aus etwa sechs peripheren Funkzonen 104 umgeben ist, sondern bspw. von zwei solchen Ringen, so daß sich insgesamt etwa neunzehn Funkzonen 104 pro Funkbereich 102 ergeben.

Aufgrund der Zusammenfassung mehrerer Funkzonen 104 zu Funkbereichen 102 mit einheitlichen Sendefrequenzen A; B; C sind die gegenseitigen Störungen selbst bei denjenigen Sendestationen 105, die in unterschiedlichen, jedoch mit denselben Sendefrequenzen, bspw. B, betriebenen Funkbereichen liegen und nur den minimalem Abstand 107 aufweisen, so gering, daß ein störungsfreier Funkbetrieb gewährleistet ist. Denn der Abstand derartiger, für Gleichkanalstörungen besonders empfindlicher Sendestationen 105 entspricht mindestens etwa dem Radius 140 eines Funkbereichs 102, während der Radius 106 einer Funkzone 104 demgegenüber durch Erhöhung der Anzahl der Sendestationen 105 pro Funkbereich 102 nahezu beliebig verkleinert werden kann.

Sämtliche Sendestationen 105 eines Funkbereichs 102 sind über eine gemeinsame Anbindungsstation 108 an einen nicht dargestellten Funkkonzentrator gekoppelt. Zur Reduzierung des Hardware-Aufwandes sind jeweils mehrere Funkbereiche 102 derselben Anbindestation 108 zugeordnet. Zwar eignet sich hierfür bevorzugt wieder eine etwa hexagonale Struktur 109 der an jeweils eine gemeinsame Station 108 angebundenen Funkbereiche 102, dies ist jedoch nicht zwingend. Auch können die potentiellen Standorte 110 der Anbindestationen 108 bspw. innerhalb des schraffierten Bereichs variiert werden, ohne daß sich die hexagonale Struktur 109 ändert.

Bei dem in Fig. 8 dargestellten Ausschnitt aus einem Funknetz 111 haben die Funkbereiche 112 eine etwa rechteckige Struktur 113. Wie die Funkzonen 114 innerhalb dieser Funkbereiche 112 angeordnet sind, ist nicht wichtig; es bietet sich jedoch hierfür wieder eine hexagonale Struktur ähnlich der in Fig. 7 wiedergegebenen an. Auch hier befinden sich die Sendestationen 115 jeweils im Zentrum einer Funkzone 114; die Reichweite 116 entspricht dem Radius dieser Funkzonen 114. Der minimale Abstand 117 zweier Sendestationen 115 aus unterschiedlichen Funkbereichen mit jedoch demselben Sendefrequenzbereich ist geringfügig größer als eine Kante des Rechtecks 113. Dennoch ist dieser Abstand 117 aufgrund der geringen Reichweiten 116 völlig ausreichend, um einen störungsfreien Funkbetrieb zu gewährleisten. Auch hier sind jeweils mehrere Funkbereiche 112 über eine gemeinsame Anbindungsstation 118 mit einem nicht dargestellten Funkkonzentrator gekoppelt.

Hier können bspw. jeweils vier Funkbereiche 112 einer Anbindungsstation 108 zugeordnet sein, so daß deren Einflußbereich jedenfalls etwa die Form eines Rechtecks 119 aufweist. Der Standort 120 der Anbindestation 118 kann dabei nahezu über die gesamte Fläche dieses Rechteckes 119 oder gar über diese Fläche hinaus verschoben werden, wenn die Anbindung über eine Antenne mit stark gerichteter Charakteristik erfolgt. Dennoch ist natürlich der Bereich im Zentrum des Rechteckes 119 bevorzugt, da sich hier zu allen Sendestationen 115 eine minimale Laufzeit des Anbindesignals ergibt.

In Fig. 9 ist eine Funkzone 104 vergrößert herausgezeichnet, die sich am hexagonalen Rand 103 ihres Funkbereichs 102 befindet. Innerhalb ihres Funkbereichs 102 strahlen die benachbarten Sendestationen 105 dasselbe Funksignal ab, so daß sich in dem peripheren Bereich 121 zwischen zwei derartigen, benachbarten Sendestationen 5 eine Signaladdition und damit eine effektive Vergrößerung der Reichweite 106 um bspw. etwa 15 % auf einen Radius 141 ergibt.

Da der Abstand 123 zweier benachbarter Sendestationen 105 aus unterschiedlichen Funkbereichen 102, 102' kleiner sein muß als der doppelte, normale Radius 106 einer Funkzone 104, der Abstand 122 benachbarter Sendestationen 105 innerhalb des selben Funkbereichs 102 jedoch nur kleiner sein muß als der doppelte, durch die Signaladdition vergrößerte Radius 141 einer Funkzone 104, kann der Abstand 122 zwischen zwei Sendestationen 105 desselben Funkbereichs 102 größer bemessen werden als die Entfernung 123 zu einer Sendestation 105 im angrenzenden Funkbereich 102', der mit einem anderen Sendefrequenzbereich betrieben wird.

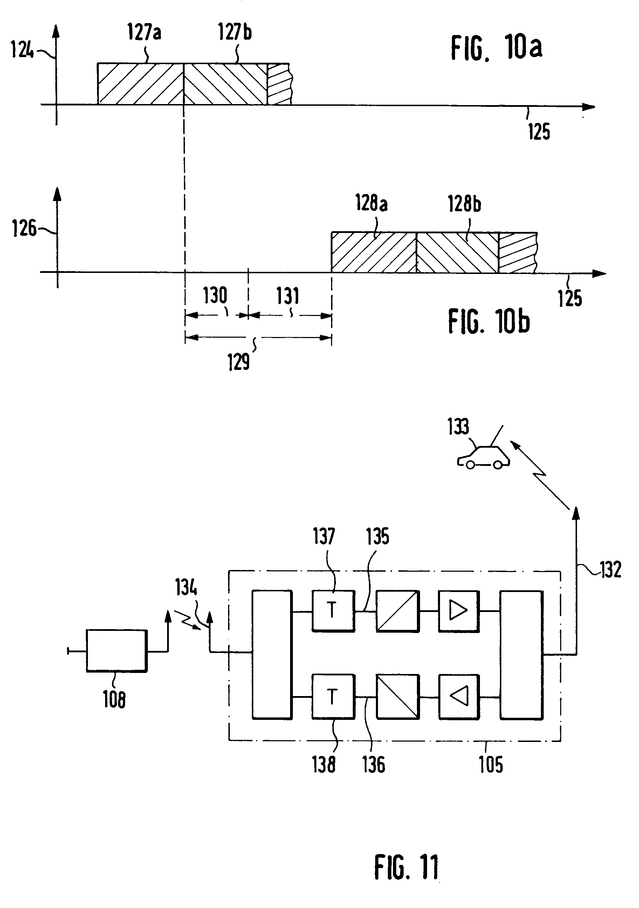

In den Fig. 10a, 10b ist das von einer Anbindungsstation 108, 118 abgestrahlte Sendesignal 124 über der Zeitachse 125 aufgetragen, ebenso das von der selben Anbindungsstation 108, 118 empfangene Signal 126. Man erkennt aus Fig. 10a, daß die gesendeten Signale entsprechend unterschiedlichen Kommunikationskanälen in einzelne Zeitblöcke 127a, 127b usw. unterteilt sind. Die entsprechenden Antwortsignale der angesprochenen, ortsfesten Sendestationen 105, 115 sind entsprechend derselben Kanalaufteilung in die Zeitblöcke 128a, 128b usw. unterteilt.

Am Ende eines gesendeten Signalblocks 127a wird in der betreffenden Anbindestation 118 ein Zeitglied mit der Zeitkonstante 129 gestartet und nach Ablauf dieser Zeitkonstante 129 wird die Empfangseinrichtung der betreffenden Kanaleinheit aktiviert, um das Antwortsignal 128a dieses Kanals zu empfangen. Die Zeitkonstante 129 umfaßt einerseits die Zeit 130, die der bei herkömmlichen Sendestationen eingestellten Wartezeit entspricht und vor allem die Reaktionszeit einer Mobilstation berücksichtigt, sowie andererseits ein zusätzliches Zeitintervall 131, das vor allem die doppelte Signallaufzeit zwischen der betreffenden Anbindungsstation 108, 118 und der am weitesten von dieser entfernten, jedoch an diese angekoppelten ortsfesten Sendestation 105, 115 berücksichtigt.

Hiermit ist gewährleistet, daß auch die am weitesten entfernte, ortsfeste Sendestation 105, 115 genügend Zeit 129 hat, um den Signalblock 127a zu empfangen, weiterzusenden, das Antwortsignal von der Mobilstation zu empfangen und als Signalblock 128a zur Anbindungsstation 108, 118 zurückzusenden.

Fig. 11 zeigt ein Blockschaltbild einer ortsfesten Sendestation 105. Man erkennt die Antenne 132 zur Flächenversorgung der zugeordneten Funkzone 104, über die die Kommunikation zu einer in dieser Funkzone 104 befindlichen Mobilstation 133 hergestellt wird. Andererseits ist eine zusätzliche Antenne 134 vorhanden, die eine auf die Anbindestation 108 gerichtete Charakteristik aufweist. Da die Richtfunkverbindung 134 in dem dargestellten Ausführungsbeispiel im Richtfunkband liegt, ist eine Frequenzumsetzung innerhalb der Sendestation notwendig. Diese Baugruppe hat daher nahezu denselben Aufbau wie die in Fig. 4 dargestellte und mit 5 bezeichnete, dezentrale Sendestation.

Im Unterschied zu dieser dezentralen Sendestation 5 ist im vorliegenden Fall sowohl im Sendezweig 135 als auch im Empfangszweig 136 der ortsfesten Sendestation 105 je ein zusätzliches Verzögerungsglied 137, 138 eingeschaltet. Die Zeitkonstanten T der Verzögerungsglieder 137, 138 sind einstellbar in einem Bereich, der etwa dem zusätzlichen Zeitintervall 131 der betreffenden Anbindungsstation 108 entspricht.

Indem die Zeitkonstanten T der Verzögerungsglieder 137, 138 der von der Anbindestation 108 am weitestens entfernten Sendestationen 105 auf Null, bei den nächstgelegenen Sendestationen 105 dagegen etwa auf jeweils das halbe Zeitintervall 131 eingestellt werden, kann Sorge dafür getragen werden, daß das von der Anbindungsstation 108 empfangene Signal von allen Sendestationen 105 desselben Funkbkereichs 102 zur selben Zeit über die flächendeckende Antenne 132 abgestrahlt wird, so daß sich in dem peripheren Bereich 121 die gewünschte Signaladdition ergibt. Auch das von der Mobilstation 133 als Antwort abgestrahlte Signal kann, sofern dieses von mehreren Sendestationen 105 empfangen wird, synchronisiert über die gerichteten Antennen 134 zur Anbindestation 108 abgestrahlt werden.

## Patentansprüche

1. Anordnung ortsfester Sendestationen (2, 5) eines flächendeckenden Funknetzes (11) mit lückenlos aneinandergereihten Funkgebieten (1), wobei jedes Funkgebiet (1) etwa in seinem Zentrum je eine über Kabel oder Richtfunk mit einem Funkkonzentrator (18) gekoppelte Sendestation (2) sowie dezentral eine Mehrzahl weiterer Sendestationen (5) aufweist, welche die zentrale Sendestation (2) umgeben und mit dieser gekoppelt sind, **dadurch gekennzeichnet**, daß jedes Funkgebiet (1) mehrere Funkbereiche (8; 14-17) aufweist, die mit jeweils unterschiedlichen Sendefrequenzen (54, 74) betrieben werden, wobei jeder Funkbereich (8; 14-17) durch jeweils mehrere benachbarte, dezentrale Sendestationen (5) gebildet ist, denen dieselben Sendefrequenzen (54, 74) zugewiesen sind.

2. Anordnung nach Anspruch 1, dadurch gekennzeichnet, daß die Sendeleistung der Kanaleinheiten (55) für die Flächenversorgung der dezentralen Sendestationen (5) niedriger ist als die Sendeleistung(en) der Kanaleinheit(en) (27, 28) für die Flächenversorgung der zentrale(n) Funkzone(n) (4a, 4b).

3. Anordnung nach Anspruch 1 oder 2, dadurch gekennzeichnet, daß die Kopplung der dezentralen Sendestationen (5) mit der betreffenden, zentralen Sendestation (2) eine drahtlose Punkt-zu-Punkt-Verbindung (48) umfaßt.

4. Anordnung nach Anspruch 3, dadurch gekennzeichnet, daß die Frequenzen (62, 75) der Punkt-zu-Punkt-Verbindungen (48) sich von den Frequenzen für die Flächenversorgung der zentralen Funkzone(n) (4) unterscheiden.

5. Anordnung nach Anspruch 4, dadurch gekennzeichnet, daß die Sendeleistung der Punkt-zu-Punkt-Verbindungen (48) niedriger ist als die Sendeleistung für die Flächenversorgung der zentrale(n) Funkzone(n) (4).

6. Verfahren zur nachträglichen Verdichtung eines bestehenden, flächendeckenden Funknetzes mit ortsfesten Sendestationen (2), welche über Kabel oder Richtfunk mit Funkkonzentratoren (18) gekoppelt sind, **dadurch gekennzeichnet**, daß dezentral innerhalb des Funkgebiets (1) bestehender Sendestationen (2) jeweils eine Mehrzahl zusätzlicher Sendestationen (5) derart angeordnet wird, daß diese in dem Außenraum der bestehenden Sendestation (2) des betreffenden Funkgebiets (1) eine für den in-door-Betrieb ausreichende Empfangsfeldstärke erzeugen, wobei die zusätzlichen Sendestationen (5) mit der bestehenden Sendestation (2) gekoppelt werden; und daß die Frequenzen (54, 74) der zusätzlichen Sendestationen (5) so gewählt werden, daß pro Funkgebiet (1) mehrere Funkbereiche (8; 14-17) mit jeweils unterschiedlichen Sendefrequenzen (54, 74) gebildet werden, wobei jeweils mehrere benachbarte, dezentrale Sendestationen (5) zu einem Funkbereich (8; 14-17) zusammengefaßt werden, indem ihnen dieselben Sendefrequenzen (54, 74) zugewiesen werden.

7. Verfahren nach Anspruch 6, dadurch gekennzeichnet, daß in den ursprünglichen Sendestationen (2), die sich im Zentrum je eines Funkgebiets (1) befinden, zusätzlich zu den Kanaleinheiten (27, 28) für die Flächenversorgung weitere Kanaleinheiten (29, 30) für die bidirektionale Informationsübertragung (48) zu mindestens einer weiteren, ortsfesten Sendestation (5) vorgesehen werden.

8. Ortsfeste Sendestation (2) für eine Anordnung nach einem der Ansprüche 1 bis 5, **dadurch gekennzeichnet**, daß zusätzlich zu den Kanaleinheiten (27, 28) für die Flächenversorgung weitere Kanaleinheiten (29, 30) für die bidirektionale Informationsübertragung (48) zu mindestens einer weiteren, ortsfesten Sendestation (5) vorhanden sind.

9. Sendestation nach Anspruch 8, dadurch gekennzeichnet, daß die Sendeleistung der Sendeeinrichtungen (36) der zusätzlichen Kanaleinheiten (29, 30) niedriger ist als die Sendeleistung der Sendeeinrichtung (36) für die Flächenversorgung.

10. Sendestation nach Anspruch 8 oder 9, dadurch gekennzeichnet, daß für eine oder mehrere der zusätzlichen, gerichteten Antennen (47) und/oder optischen Sende- und Empfangsvorrichtungen je ein Zeitglied vorhanden ist, das von der zusätzlichen Sendeeinrichtung (34) gestartet wird und nach Ablauf seiner Zeitkonstante die zusätzliche Empfangseinrichtung (45) aktiviert.

11. Sendestation nach einem der Ansprüche 8 bis 10, gekennzeichnet durch einen oder mehrere Auswahlschaltkreis(e), um in Abhängigkeit von der Empfangsfeldstärke eines von mehreren der angekoppelten, ortsfesten Sendestationen (5) übertragenen Signals (66, 67) die zugeordnete(n) Ankopplungsantenne(n) (47, 64) auszuwählen.

12. Ortsfeste Sendestation (5) für eine Anordnung nach einem der Ansprüche 1 bis 5, **dadurch gekennzeichnet**, daß zusätzlich zu der (den) Antenne(n) (57) für die Flächenversorgung eine gerichtete Antenne (49) oder optische Sende- und Empfangsvorrichtung für die bidirektionale Informationsübertragung (48) zu einer weiteren, ortsfesten Sendestation (2) vorhanden ist.

13. Sendestation nach Anspruch 12, dadurch gekennzeichnet, daß die beiden Antennen(gruppen) (49, 57) über zwei antiparallel geschaltete, frequenzselektive Verstärker (55, 63) miteinander gekoppelt sind.

14. Sendestation nach Anspruch 13, dadurch gekennzeichnet, daß zwischen der Frequenzfilterbaugruppe (50, 56) und dem nachgeschalteten Verstärker (55, 63) je ein Frequenzumsetzer (53, 61) eingefügt ist.

15. Anordnung ortsfester Sendestationen (105;115) eines flächendeckenden Funknetzes (101;111), dessen Fläche in eine Vielzahl von Funkbereichen (102;102';112) mit jeweils einheitlichen Sendefrequenzen unterteilt ist, wobei jeweils aneinandergrenzende Funkbereiche (102,102';112) mit unterschiedlichen Sendefrequenzen betrieben werden, **dadurch gekennzeichnet**, daß mindestens diejenigen Funkbereiche (102;112), die mit bestimmten Sendefrequenzen betrieben werden, aus jeweils mehreren Funkzonen (104;114) gebildet sind, deren Flächen von jeweils einer ortsfesten Sendestation (105;115) abgedeckt werden, wobei jede ortsfeste Sendestation (105;115) ausschließlich einem Funkbereich (102;112) zugeordnet ist.

16. Anordnung nach Anspruch 15, dadurch gekennzeichnet, daß die ortsfesten Sendestationen (105), die sich am Rand (103) eines Funkbereichs (102;102') befinden, einen geringeren gegenseitigen Abstand (123) aufweisen als im Inneren des Funkbereichs (102) angeordnete, ortsfeste Sendestationen (105) (Abstand 122).

17. Anordnung nach Anspruch 15 oder 16, dadurch gekennzeichnet, daß die ortsfesten Sendestationen (105), die sich am Rand (103) eines Funkbereichs (102,102') befinden, eine niedrigere Sendeteistung aufweisen als im Inneren des Funkbereichs (102) angeordnete, ortsfeste Sendestationen (105).

18. Anordnung nach einem der Ansprüche 15 bis 17, dadurch gekennzeichnet, daß mehrere ortsfeste Sendestationen (105;115) über eine zugeordnete, zentrale Station (108;118) mit einem Funkkonzentrator gekoppelt sind.

19. Anordnung nach einem der Ansprüche 15 bis 18, dadurch gekennzeichnet, daß sämtliche ortsfesten Sendestationen (105) eines Funkbereichs (102) über eine gemeinsame Anbindungsstation (108) an einen Funkkonzentrator gekoppelt sind.

20. Anordnung nach einem der Ansprüche 15 bis 19, dadurch gekennzeichnet, daß die ortsfesten Sendestationen (105) jeweils mehrerer Funkbereiche (102) ein und derselben Anbindungsstation (108) zugeordnet sind.

21. Anordnung nach einem der Ansprüche 18 bis 20, dadurch gekennzeichnet, daß den zentralen Stationen keine eigene Funkzone zugeordnet ist.

22. Anordnung nach einem der Ansprüche 18 bis 21, dadurch gekennzeichnet, daß für sämtliche, an die selbe zentrale Station (108;118) angebundenen, ortsfesten Sendestationen (105;115) eines Funkbereichs (102;112) gemeinsame Kanaleinheiten zur Ankopplung an den Funkkonzentrator vorhanden sind, die innerhalb der zugeordneten, zentralen Station (108;118) angeordnet sind.

23. Anordnung nach Anspruch 22, dadurch gekennzeichnet, daß in den zentralen Stationen (108) jeweils mindestens ein Laufzeitglied vorhanden ist, das von der Sendeeinrichtung einer Kanaleinheit gestartet wird und nach Ablauf seiner Zeitkonstante (129) die Empfangseinrichtung der betreffenden Kanaleinheit aktiviert.

24. Anordnung nach einem der Ansprüche 18 bis 23, dadurch gekennzeichnet, daß jede zentrale Station (108) mit den zugeordneten, ortsfesten Sendestationen (105) über eine Punkt-zu-Punkt-Verbindung oder über eine Fläche-zu-Punkt-Verbindung (134) gekoppelt ist.

25. Anordnung nach Anspruch 24, dadurch gekennzeichnet, daß an den mit der Anbindungsantenne (134) gekoppelten Ein- und/oder Ausgängen der antiparallel geschalteten Sende- (135) und Empfangszweige (136) aus je einem Verstärker sowie ggf. einem Frequenzumsetzer ein Verzögerungsglied (137,138) mit einstellbarer Zeitkonstante (T) eingeschalten ist.

26. Verfahren zum Betrieb einer Anordnung nach Anspruch 23 in Verbindung mit Anspruch 25, in der die Zeitkonstante (129) des Zeitglieds in der zentralen Station (108) der Summe der doppelten Laufzeit (131) zwischen der zentralen Station (108) und der am weitesten entfernten, ortsfesten Sendestation (105), der doppelten Signallaufzeit (131) durch eine ortsfeste Sendestation (105) bei minimal eingestellter Verzögerungszeitkonstante (T) sowie einer fest vorgegebenen Reaktionszeit (130) entspricht.

27. Ortsfeste Sendestation für eine Anordnung nach einem der Ansprüche 15 bis 25, mit einer Anbindungsantenne sowie einer Antenne für die Flächenversorgung, die über zwischen den Antennenfiltern antiparallel geschaltete Sende- und Empfangszweige aus je einem Verstärker sowie ggf. einem Frequenzumsetzer miteinander gekoppelt sind, bei der in den Sende- (135) und/oder Empfangszweig (136) ein Verzögerungsglied (137,138) mit einstellbarer Zeitkonstante (T) eingeschalten ist.

28. Ortsfeste Sendestation, für eine Anordnung nach einem der Ansprüche 15 bis 25, mit einer Anbindungsantenne sowie einer Antenne für die Flächenversorgung, die über zwischen den Antennenfiltern antiparallel geschaltete Sende- und Empfangszweige aus je einem Verstärker sowie ggf. einem Frequenzumsetzer miteinander gekoppelt sind, bei der in dem Empfangszweig ein die Feldstärke des empfangenen Signals erfassender Detektor angeordnet ist, der bei Überschreiten eines Schwellwerts einen in den Sendezweig eingefügten Schalter schließt.

## Claims

1. Arrangement of fixed transmitting stations (2, 5) of an area-covering radio network (11) with contiguous radio regions (1), wherein each radio region (1) comprises approximately in its centre a respective transmitting station (2), which is coupled to a radio concentrator (18) via cables or directional radio, and a plurality of further, remote transmitting stations (5), which surround the central transmitting station (2) and are coupled to the latter, **characterised in that** each radio region (1) comprises several radio ranges (8; 14-17) each operated at different transmitting frequencies (54, 74), wherein each radio range (8; 14-17) is formed by several adjacent, remote transmitting stations (5), to which the same transmitting frequencies (54, 74) are allocated.

2. Arrangement according to Claim 1, characterised in that the transmitting power of the channel units (55) for supplying the area of the remote transmitting stations (5) is lower than the transmitting power(s) of the channel unit(s) (27, 28) for supplying the area of the central radio zone(s) (4a, 4b).

3. Arrangement according to Claim 1 or 2, characterised in that the coupling of the remote transmitting stations (5) to the relevant, central transmitting station (2) comprises a wireless point-to-point connection (48).

4. Arrangement according to Claim 3, characterised in that the frequencies (62, 75) of the point-to-point connections (48) differ from the frequencies for supplying the area of the central radio zone(s) (4).

5. Arrangement according to Claim 4, characterised in that the transmitting power of the point-to-point connections (48) is lower than the transmitting power for supplying the area of the central radio zone(s) (4).

6. Method for subsequently compacting an existing, area-covering radio network with fixed transmitting stations (2), which are coupled to radio concentrators (18) via cables or directional radio,
**characterised in that** a plurality of additional transmitting stations (2) are in each case arranged remotely within the radio region (1) of existing transmitting stations (2) such that these produce a received field strength sufficient for indoor operation in the surrounding space of the existing transmitting station (2) of the relevant radio region (1), wherein the additional transmitting stations (5) are coupled to the existing transmitting station (2); and that the frequencies (54, 74) of the additional transmitting stations (5) are selected such that several radio ranges (8; 14-17) each with different transmitting frequencies (54, 74) are formed per radio region (1), wherein several adjacent, remote transmitting stations (5) are in each case combined to form a radio range (8; 14-17) by allocating the same transmitting frequencies (54, 74) to them.

7. Method according to Claim 6, characterised in that, in addition to the channel units (27, 28) for the area supply, further channel units (29, 30) are provided in the original transmitting stations (2), which are located in the centre of each radio region (1), for bidirectional information transmission (48) to at least one further, fixed transmitting station (5).

8. Fixed transmitting station (2) for an arrangement according to any one of Claims 1 to 5,
**characterised in that**, in addition to the channel units (27, 28) for the area supply, further channel units (29, 30) are provided for bidirectional information transmission (48) to at least one further, fixed transmitting station (5).

9. Transmitting station according to Claim 8, characterised in that the transmitting power of the transmitting devices (36) of the additional channel units (29, 30) is lower than the transmitting power of the transmitting device (36) for the area supply.

10. Transmitting station according to Claim 8 or 9, characterised in that a respective timing element is provided for one or more of the additional, directional aerials (47) and/or optical transmitting and receiving appliances, which element is started by the additional transmitting device (34) and activates the additional receiving device (45) at the end of its time constant.

11. Transmitting station according to any one of Claims 8 to 10, characterised by one or more selector circuit(s) in order to select the associated coupling aerial(s) (47, 64) in accordance with the received field strength of a signal (66, 67) transmitted by several of the coupled, fixed transmitting stations (5).

12. Fixed transmitting station (5) for an arrangement according to any one of Claims 1 to 5, **characterised in that**, in addition to the aerial(s) (57) for the area supply, a directional aerial (49) or an optical transmitting and receiving appliance is provided for bidirectional information transmission (48) to a further, fixed transmitting station (2).

13. Transmitting station according to Claim 12,
characterised in that the two aerials (aerial groups) (49, 57) are coupled together via two antiparallel-connected, frequency-selective amplifiers (55, 63).

14. Transmitting station according to Claim 13,
characterised in that a respective frequency converter (53, 61) is inserted between the frequency filter module (50, 56) and the downstream amplifier (55, 63).

15. Arrangement of fixed transmitting stations (105; 115) of an area-covering radio network (101; 111), the area of which is divided into a plurality of radio ranges (102; 102'; 112) each with standardised transmitting frequencies, wherein adjacent radio ranges (102, 102'; 112) are each operated with different transmitting frequencies,
**characterised in that** at least those radio ranges (102; 112) which are operated with certain transmitting frequencies are each formed from several radio zones (104; 114), the areas of which are covered by a respective fixed transmitting station (105; 115), wherein each fixed transmitting station (105; 115) is associated with just one radio range (102; 112).

16. Arrangement according to Claim 15, characterised in that the fixed transmitting stations (105) which are located at the edge (103) of a radio range (102; 102') have a smaller mutual spacing (123) than fixed transmitting stations (105) arranged in the interior of the radio range (102) (spacing 122).

17. Arrangement according to Claim 15 or 16, characterised in that the fixed transmitting stations (105) which are located at the edge (103) of a radio range (102, 102') have a lower transmitting power than fixed transmitting stations (105) arranged in the interior of the radio range (102).

18. Arrangement according to any one of Claims 15 to 17, characterised in that several fixed transmitting stations (105; 115) are coupled to a radio concentrator via an associated, central station (108; 118).

19. Arrangement according to any one of Claims 15 to 18, characterised in that all the fixed transmitting stations (105) of a radio range (102) are coupled to a radio concentrator via a common interface station (108).

20. Arrangement according to any one of Claims 15 to 19, characterised in that the fixed transmitting stations (105) of several respective radio ranges (102) are associated with one and the same interface station (108).

21. Arrangement according to any one of Claims 18 to 20, characterised in that no particular radio zone is associated with the central stations.

22. Arrangement according to any one of Claims 18 to 21, characterised in that common channel units for coupling to the radio concentrator are provided for all the fixed transmitting stations (105; 115) connected to the same central station (108; 118), which channel units are arranged inside the associated, central station (108; 118).

23. Arrangement according to Claim 22, characterised in that at least one respective delay element is provided in the central station (108), which element is started by the transmitting device of a channel unit and activates the receiving device of the relevant channel unit at the end of its time constant (129).

24. Arrangement according to any one of Claims 18 to 23, characterised in that each central station (108) is coupled to the associated, fixed transmitting station (105) via a point-to-point connection or via an area-to-point connection (134).

25. Arrangement according to Claim 24, characterised in that a delay element (137, 138) with an adjustable time constant (T) is connected to the inputs and/or outputs, coupled to the interface aerial (134), of the antiparallel-connected transmitting (135) and receiving branches (136) consisting of a respective amplifier and optionally a frequency converter.

26. Method for operating an arrangement according to Claim 23 in conjunction with Claim 25, in which the time constant (129) of the timing element in the central station (108) corresponds to the sum of twice the delay time (131) between the central station (108) and the most distant, fixed transmitting station (105), twice the signal delay time (131) through the fixed transmitting station (105) with a minimum time delay time constant (T), and a prefixed response time (130).

27. Fixed transmitting station for an arrangement according to any one of Claims 15 to 25, with an interface aerial and an aerial for the area supply, which aerials are coupled together via transmitting and receiving branches which are connected in antiparallel fashion between the aerial filters and consist of a respective amplifier and optionally a frequency converter, in which a delay element (137, 138) with an adjustable time constant (T) is connected into the transmitting (135) and/or receiving branch (136).

28. Fixed transmitting station for an arrangement according to any one of Claims 15 to 25, with an interface aerial and an aerial for the area supply, which aerials are coupled together via transmitting and receiving branches which are connected in antiparallel fashion between the aerial filters and consist of a respective amplifier and optionally a frequency converter, in which a detector which detects the field strength of the received signal is arranged in the receiving branch and closes a switch inserted in the transmitting branch when a threshold value is exceeded.

## Revendications

1. Groupement de stations émettrices fixes (2, 5) d'un réseau de transmission radio à couverture de surface (11) comportant des territoires de transmission radio (1) disposés côté à côte sans vide entre eux, chaque territoire de transmission radio (1) comportant, à peu près en son centre, une station émettrice respective (2), couplée, par câble ou faisceau hertzien, à un concentrateur de signaux radio (18), ainsi qu'en position périphérique, une multiplicité de stations émettrices supplémentaires (5), qui entourent la station émettrice centrale (2) et sont couplées à celle-ci, caractérisé en ce que chaque territoire de transmission radio (1) comporte plusieurs régions de transmission radio (8; 14 à 17), qui sont exploitées avec des fréquences respectives d'émission (54, 74) différentes, chaque région de transmission radio (8; 14 à 17) étant formée par plusieurs stations émettrices périphériques respectives voisines (5), auxquelles sont affectées les mêmes fréquences d'émission (54, 74).

2. Groupement selon la revendication 1, caractérisé en ce que la puissance d'émission des groupes de voies (55) pour la desserte de surface des stations émettrices périphériques (5) est plus faible que la (les) puissance(s) d'émission du (des) groupe(s) de voies (27, 28) pour la desserte de surface de la (des) zone(s) centrale(s) de transmission radio (4a, 4b).

3. Groupement selon la revendication 1 ou 2, caractérisé en ce que le couplage des stations émettrices périphériques (5) à la station émettrice centrale rattachée (2) comprend une liaison sans fil de point à point (48).

4. Groupement selon la revendication 3, caractérisé en ce que les fréquences (62, 75) des liaisons de point à point diffèrent des fréquences pour la desserte de surface de la (des) zone(s) centrale(s) de transmission radio (4).

5. Groupement selon la revendication 4, caractérisé en ce que la puissance d'émission des liaisons de point à point (48) est plus faible que la puissance d'émission pour la desserte de surface de la (des) zone(s) centrale(s) de transmission radio (4).

6. Procédé de densification a posteriori d'un réseau existant de transmission radio à couverture de surface comportant des stations émettrices fixes (2) qui sont couplées, par câble ou faisceau hertzien, à des concentrateurs de signaux radio (18), caractérisé en ce qu'à l'intérieur du territoire de transmission radio (1) de stations émettrices existantes (2), est respectivement disposée, en position périphérique, une multiplicité de stations émettrices additionnelles (5), ceci d'une façon telle que celles-ci produisent, dans l'environnement extérieur de la station émettrice existante (2) du territoire de transmission radio concerné (1), une intensité de champ reçue suffisante pour le service de postes intérieurs, les stations émettrices additionnelles (5) étant couplées à la station émettrice existante (2); et en ce que les fréquences (54, 74) des stations émettrices additionnelles (5) sont choisies de telle sorte que plusieurs régions de transmission radio (8; 14 à 17) à fréquences respectives d'émission différentes (54, 74) soient formées dans chaque territoire de transmission radio (1), plusieurs stations émettrices périphériques voisines (5) étant chaque fois regroupées en une région de transmission radio (8; 14 à 17) par le fait que les mêmes fréquences d'émission (54, 74) leur sont affectées.

7. Procédé selon la revendication 6, caractérisé en ce que, dans les stations émettrices d'origine (2) qui se trouvent chacune au centre d'un territoire de transmission radio (1), en plus des groupes de voies (27, 28) pour la desserte de surface sont prévus des groupes de voies supplémentaires (29, 30) pour la transmission bidirectionnelle d'informations (48) à au moins une station émettrice fixe supplémentaire (5).

8. Station émettrice fixe (2) pour un groupement selon l'une des revendications 1 à 5, caractérisée en ce qu'en plus des groupes de voies (27, 28) pour la desserte de surface, y sont présents des groupes de voies supplémentaires (29, 30) pour la transmission bidirectionnelle d'informations (48) à au moins une station émettrice fixe supplémentaire (5).

9. Station émettrice selon la revendication 8, caractérisée en ce que la puissance d'émission des équipements émetteurs (36) des groupes de voies additionnels (29, 30) est plus faible que la puissance d'émission de l'équipement émetteur (36) pour la desserte de surface.

10. Station émettrice selon la revendication 8 ou 9, caractérisée en ce que pour une ou plusieurs des antennes directives additionnelles (47) et/ou un ou plusieurs des dispositifs optiques d'émission et de réception additionnels, il existe un temporisateur respectif qui est déclenché par l'équipement émetteur additionnel (34) et, après l'expiration de sa constante de temps, active l'équipement récepteur additionnel (45).

11. Station émettrice selon l'une des revendications 8 à 10, caractérisée par un ou plusieurs circuit(s) sélecteur(s) permettant, en fonction de l'intensité de champ reçue d'un signal (66, 67) transmis par plusieurs des stations émettrices fixes (5) couplées, de sélectionner la (les) antenne(s) de couplage associée(s) (47, 64).

12. Station émettrice fixe (5) pour un groupement selon l'une des revendications 1 à 5, caractérisée en ce qu'en plus de la (des) antenne(s) (57) pour la desserte de surface, y est présent une antenne directive (49) ou un dispositif optique d'émission et de réception, pour la transmission bidirectionnelle d'informations (48) à une station émettrice fixe supplémentaire (2).

13. Station émettrice selon la revendication 12, caractérisée en ce que les deux antennes (groupes d'antennes) (49, 57) sont couplées l'une à l'autre par l'intermédiaire de deux amplificateurs sélectifs en fréquence (55, 63), montés en tête-bêche.

14. Station émettrice selon la revendication 13, caractérisée en ce qu'entre chaque bloc formant filtre de fréquences (50, 56) et l'amplificateur (55, 63) monté en aval, est inséré un convertisseur de fréquence (53, 61).

15. Groupement de stations émettrices fixes (105; 115) d'un réseau de transmission radio (101; 111) à couverture de surface, dont la surface est subdivisée en un grand nombre de régions de transmission radio (102; 102'; 112) chacune à fréquence d'émission unitaire, des régions de transmission radio contiguës (102, 102'; 112) étant chaque fois exploitées avec des fréquences d'émission différentes, caractérisé en ce qu'au moins celles des régions de transmission radio (102; 112), qui sont exploitées avec des fréquences d'émission déterminées, sont formées chacune de plusieurs zones de transmission radio (104; 114), dont les surfaces sont chacune couvertes par une station émettrice fixe respective (105; 115), chaque station émettrice fixe (105; 115) étant associée exclusivement à une région de transmission radio (102; 112).

16. Groupement selon la revendication 15, caractérisé en ce que les stations émettrices fixes (105), qui se trouvent à la lisière (103) d'une région de transmission radio (102; 102'), présentent une distance d'éloignement mutuel (123) plus petite que des stations émettrices fixes (105) disposées dans la partie intérieure de la région de transmission radio (102) (distance d'éloignement 122).

17. Groupement selon la revendication 15 ou 16, caractérisé en ce que les stations émettrices fixes (105), qui se trouvent à la lisière (103) d'une région de transmission radio (102, 102'), présentent une puissance d'émission plus faible que des stations émettrices fixes (105) disposées dans la partie intérieure de la région de transmission radio (102).

18. Groupement selon l'une des revendications 15 à 17, caractérisé en ce que plusieurs stations émettrices fixes (105; 115) sont couplées à un concentrateur de signaux radio par l'intermédiaire d'une station centrale associée (108; 118).

19. Groupement selon l'une des revendications 15 à 18, caractérisé en ce que toutes les stations émettrices fixes (105) d'une région de transmission radio (102) sont couplées à un concentrateur de signaux radio par l'intermédiaire d'une station commune de mise en liaison (108).

20. Groupement selon l'une des revendications 15 à 19, caractérisé en ce que les stations émettrices fixes (105) de plusieurs régions de transmission radio respectives (102) sont associées à une seule et même station de mise en liaison (108).

21. Groupement selon l'une des revendications 18 à 20, caractérisé en ce qu'aux stations centrales n'est associée aucune zone propre de transmission radio.

22. Groupement selon l'une des revendications 18 à 21, caractérisé en ce que pour l'ensemble des stations émettrices fixes (105; 115) d'une région de transmission radio (102; 112) mises en liaison avec la même station centrale (108; 118), il existe des groupes de voies communs pour le couplage au concentrateur de signaux radio, qui sont disposés à l'intérieur de la station centrale associée (108; 118).

23. Groupement selon la revendication 22, caractérisé en ce que dans chacune des stations centrales (108), est présent au moins un élément de temporisation, qui est déclenché par l'équipement émetteur d'un groupe de voies et qui, après l'expiration de sa constante de temps (129), active l'équipement récepteur du groupe de voies concerné.

24. Groupement selon l'une des revendications 18 à 23, caractérisé en ce que chaque station centrale (108) est couplée aux stations émettrices fixes associées (105) au moyen d'une liaison de point à point ou au moyen d'une liaison de surface à point (134).

25. Groupement selon la revendication 24, caractérisé en ce qu'un élément retardateur (137, 138) à constante de temps réglable (T) est connecté aux entrées et/ou aux sorties, couplées à l'antenne de mise en liaison (134), de la branche d'émission (135) et de la branche de réception (136) constituées chacune d'un amplificateur ainsi que, le cas échéant, d'un convertisseur de fréquence et montées en tête-bêche.

26. Procédé pour l'exploitation d'un groupement selon la revendication 23 dans son rattachement à la revendication 25, dans lequel la constante de temps (129) du temporisateur dans la station centrale (108) correspond à la somme du temps de propagation doublé (131) entre la station centrale (108) et la station émettrice fixe (105) la plus éloignée, du temps de propagation doublé (131) des signaux à travers une station émettrice fixe (105) pour une constante de temps de retardement (T) réglée à sa valeur minimale, ainsi que d'un temps de réaction (130) pré-établi à une valeur fixe.

27. Station émettrice fixe pour un groupement selon l'une des revendications 15 à 25, comportant une antenne de mise en liaison ainsi qu'une antenne pour la desserte de surface, qui sont couplées l'une à l'autre au moyen d'une branche d'émission et d'une branche de réception constituées chacune d'un amplificateur ainsi que, le cas échéant, d'un convertisseur de fréquence et montées en tête-bêche entre les filtres d'antenne, un élément retardateur (137, 138) à constante de temps réglable (T) étant inséré dans la branche d'émission (135) et/ou la branche de réception (136).

28. Station émettrice fixe pour un groupement selon l'une des revendications 15 à 25, comportant une antenne de mise en liaison ainsi qu'une antenne pour la desserte de surface, qui sont couplées l'une à l'autre au moyen d'une branche d'émission et d'une branche de réception constituées chacune d'un amplificateur ainsi que, le cas échéant, d'un convertisseur de fréquence et montées en tête-bêche entre les filtres d'antenne, un détecteur qui décèle l'intensité de champ du signal reçu et qui ferme un commutateur inséré dans la branche d'émission, en cas de dépassement d'une valeur de seuil, étant alors disposé dans la branche de réception.
